(19) Europäisches Patentamt
European Patent Office
Office européen des brevets

(11) **EP 3 227 741 B1**

(12) **EUROPEAN PATENT SPECIFICATION**

(45) Date of publication and mention
of the grant of the patent:
**08.07.2020 Bulletin 2020/28**

(51) Int Cl.:
**G02B 21/36** (2006.01)  **G02B 27/58** (2006.01)

(21) Application number: **15865492.1**

(22) Date of filing: **04.12.2015**

(86) International application number:
**PCT/US2015/064126**

(87) International publication number:
**WO 2016/090331 (09.06.2016 Gazette 2016/23)**

(54) **MULTIPLEXED FOURIER PTYCHOGRAPHY IMAGING SYSTEMS AND METHODS**

MULTIPLEXIERTE FOURIER-PTYCHOGRAFIE-BILDGEBUNGSSYSTEME UND VERFAHREN

SYSTÈMES ET PROCÉDÉS D'IMAGERIE PTYCHOGRAPHIQUE DE FOURIER MULTIPLEXÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2014 US 201462087633 P**

(43) Date of publication of application:
**11.10.2017 Bulletin 2017/41**

(73) Proprietor: **California Institute of Technology Pasadena, CA 91125 (US)**

(72) Inventors:
• **HORSTMEYER, Roarke W.**
**Palo Alto, California 94301 (US)**
• **ZHENG, Guoan**
**Vernon, Connecticut 06066 (US)**
• **YANG, Changhuei**
**Alhambra, California 91801 (US)**

(74) Representative: **Murgitroyd & Company Murgitroyd House 165-169 Scotland Street Glasgow G5 8PL (GB)**

(56) References cited:
US-A1- 2010 135 547    US-A1- 2010 135 547
US-A1- 2013 223 685    US-A1- 2014 007 307
US-A1- 2014 126 691    US-B1- 8 624 968

• LEI TIAN ET AL: "Multiplexed coded illumination for Fourier Ptychography with an LED array microscope References and links", OPT. LETT. NAT. PHOTONICS OPT. LETT. J. MICROSCOPY NATURE METHODS J. MICROSCOPY NAT. PHOTONICS OPT. EXPRESS J. PATHOLOGY INFORMATICS OPT. LETT. PHYS. REV. LETT. OPT. EXPRESS J. R. FIENUP APPL. OPT. APPL. PHYS. LETT. OPT. EXPRESS ULTRAMICROSCOPY ULTRA, vol. 1103010, no. 62, 1 January 2014 (2014-01-01), pages 3987-3989, XP055431313,
• GUOAN ZHENG ET AL: "Wide-field, high-resolution Fourier ptychographic microscopy", NATURE PHOTONICS, vol. 7, no. 9, 28 July 2013 (2013-07-28), pages 739-745, XP055181687, ISSN: 1749-4885, DOI: 10.1038/nphoton.2013.187

EP 3 227 741 B1

## Description

CROSS-REFERENCES TO RELATED APPLICATIONS

This application is a continuation-in-part application of U.S. Patent Application 14/065,280 titled "FOURIER PTYCHOGRAPHIC IMAGING SYSTEMS, DEVICES, AND METHODS" and filed on October 28, 2013, which claims priority to both U.S. Provisional Patent Application No. 61/720,258, titled "Breaking the Spatial Product Barrier via Non-Interferometric Aperture-Sythesizing Microscopy (NAM)," filed on Octobter 30, 2012 and to U.S. Provisional Patent Application No. 61/847,472 titled "Fourier Ptychographic Microscopy," filed on July 17, 2013. This application is also a non-provisional application of and claiming priority to U.S. Provisional Patent Application No. 62/087,633, titled "Hadamard multiplexed Fourier ptychography" and filed on December 4, 2014.

FEDERALLY SPONSORED RESEARCH OR DEVELOPMENT

This invention was made with government support under Grant No. OD007307 awarded by the National Institutes of Health. The government has certain rights in the invention

BACKGROUND

Certain embodiments described herein are generally related to digital imaging, and more specifically, to Multiplexed Fourier Ptychographic imaging systems and their components, and Multiplexed Fourier Ptychographic imaging methods.

Ptychography imaging involves collecting lower resolution intensity images and reconstructing them into a higher resolution image. Over the past two decades, ptychographic imaging has been used in a variety of regimes to produce high-resolution, wide field-of-view images of microscopic and nanoscopic phenomena. Whether in the X-ray regime at third-generation synchrotron sources, in the electron microscope for atomic scale phenomena, or in the in the optical regime for biological samples, ptychography has shown an unparalleled ability to acquire hundreds of megapixels of sample information near the diffraction limit. Typically, the underlying operation of ptychography is to sample a series of diffraction patterns from a sample as it is scanned through a focused beam. These intensity-only measurements are then reconstructed into a complex (i.e. amplitude and phase), high-resolution image with more pixels of sample information than any single recorded diffraction pattern.

Recently, a Fourier ptychographic imaging technique was introduced that constructs a high-resolution sample complex, high-resolution image from a series of low-resolution intensity measurements captured while the sample of interest is sequentially illuminated from different incidence angles. In one particular implementation, a Fourier ptychographic microscopy (FPM) system uses an array of light emitting diodes (LEDs) located beneath, a thin, semi-transparent sample of interest. Each LED approximates a point illumination source. During image acquisition, the FPM system sequentially turns on individual LEDs to provide illumination incident to the sample from different angles. The light from each LED passes through the thin sample and to an imaging lens (e.g., a conventional microscope objective). The light detector receives diffraction patterns from the imaging lens and captures intensity measurements to form a unique lower resolution image for each incidence angle. The set of lower resolution images acquired during sequential illumination by different incidence angles can be reconstructed into a high-resolution complex measurement through a phase-retrieval operation. An example of this standard Fourier ptychographic imaging technique and an FPM system that implements this technique can be found in Zheng, Guoan, Horstmeyer, Roarke, and Yang, Changhuei, "Wide-field, high-resolution Fourier ptychographic microscopy," Nature Photonics vol. 7, pp. 739-745 (2013) and in U.S. Patent Application 14/065,280, titled "Fourier Ptychographic Imaging Systems, Devices, and Methods" and filed on October 28, 2013.

Further a ptychographic microscope using different pattern of multiple LEDs is disclosed in Lei Tian "Multiplexed coded illumination for Fourier Ptychography with an LED array microscope" Biomedical Optics Express Vol 5, Issue 7, pp. 2376-2389 (2014).

SUMMARY

The present invention is defined by the claims appended hereto. Certain embodiments pertain to digital imaging, and more specifically, to Multiplexed Fourier Ptychographic imaging systems and their components, and Multiplexed Fourier Ptychographic imaging methods.

Certain embodiments pertain to a multiplexed Fourier Ptychographic imaging system. The system comprises an LED array configured to illuminate a sequence of LED patterns, the LED array located to illuminate a sample being imaged. The system further comprises LED circuitry in electrical communication with the LED array, wherein the LED circuitry is configured to independently control power to turn on multiple LEDs simultaneously in each LED pattern. The system further comprises a lens configured to collect light issuing from the illuminated sample. The system further comprises a light detector configured to receive light from the lens to acquire a first set of lower resolution images associated with the sequence of LED patterns, wherein each lower resolution image is based on light received during an exposure time. The system further comprises a processor configured to use the first set of lower resolution images to generate a second set of lower resolution images associated with each LED in the LED array and to iteratively update overlapping regions in the Fourier domain with the second set of lower resolution images to generate a higher resolution image.

Certain embodiments pertain to an LED array assembly in a multiplexed Fourier Ptychographic imaging system. The LED array assembly generally comprises an LED array and LED circuitry in electrical communication with the LED array. The LED array is configured to illuminate a sequence of LED patterns, the LED array located to illuminate a sample being imaged. The LED circuitry is configured to independently control power to turn on multiple LEDs simultaneously in each LED pattern.

Certain embodiments pertain to a multiplexing Fourier Ptychographic imaging method. The method comprises multiplexed illuminating of a sample by a sequence of LED patterns. The method collects light issuing from the illuminated sample using a lens. The method acquires a first set of low resolution images of the sample using a light detector receiving light from the lens. Each low resolution image captured during an exposure time while one of the LED patterns is illuminated. The method generates a second set of low resolution images of the sample using the first set. Each low resolution image of the second set of images is associated with a single LED in the LED patterns. The method reconstructs a higher resolution image of the sample by iteratively updating overlapping regions in Fourier space with the second set of low resolution images.

These and other features are described in more detail below with reference to the associated drawings.

BRIEF DESCRIPTION OF THE DRAWINGS

FIG. 1 is a block diagram of components of a Multiplexed Fourier ptychographic imaging system, according to embodiments.

FIG. 2 is a schematic drawing of a side view of an image collection assembly, according to an embodiment.

FIG. 3 is a schematic drawing of a perspective view of an image collection assembly, according to an embodiment.

FIG. 4 is a schematic drawing of an LED array assembly with LED circuitry that can provide constant power simultaneously to any and all LEDs within the LED array, according to an embodiment.

FIG. 5 is a schematic drawing of a LED array assembly, according to an embodiment.

FIG. 6 is a drawing of seven 2D LED patterns, according to an embodiment.

FIG. 7 is a schematic illustration of a sequence of LED patterns in a one-dimensional LED array, according to an embodiment.

FIG. 8 is a schematic illustration of a one-dimensional LED array with seven LEDs where only one LED is turned on during each image acquisition, according to an embodiment.

FIG. 9 is a flowchart of a Multiplexed Fourier ptychographic imaging method, according to embodiments.

FIG. 10 is a flowchart of a reconstruction process, according to an embodiment.

FIG. 11 is a flowchart of a reconstruction process, according to an embodiment.

FIG. 12 is a block diagram of one or more subsystems that may be present in certain Multiplexed Fourier ptychographic imaging systems, according to embodiments.

DETAILED DESCRIPTION

Embodiments of the present invention will be described below with reference to the accompanying drawings.

The features illustrated in the drawings may not be to scale.

Certain embodiments pertain to multiplexed Fourier Ptychographic imaging systems, system components, and methods. In certain aspects, a multiplexed Fourier Ptychographic imaging system comprises an LED array assembly with circuitry connected to an LED array for independently controlling power to turn on multiple LEDs simultaneously in each pattern of a sequence of LED patterns for multiplexed illumination of a sample. The system further comprises a processor in communication with the LED circuitry and in communication with a light detector. The system determines the sequence of LED patterns and exposure time to use during each cycle and sends control signals to control the turning on of the individual LEDs to illuminate the LED patterns during image acquisition. The system further comprises an imaging lens (e.g. objective lens) located to receive light issuing from the illuminated sample. The system comprises a light detector positioned to receive diffraction patterns transferred from the imaging lens based on light issuing from the illuminated sample. The light detector receives photons and takes intensity measurements for an exposure time during illumination by each LED pattern to acquire a single lower resolution image. The processor sends control signals to the light detector to control image acquisition by the light detector based on the determined exposure time. During each cycle, the light detector acquires a first set of lower resolution images while the sample is illuminated by the sequence of LED patterns. Using the first set of lower resolution images, the system generates a second set of lower resolution images and this second set of lower resolution images is used to generate a higher resolution image.

During each cycle, the system determines a sequence of LED patterns and an exposure time to use during the cycle. Multiple LEDs of each pattern are turned on simultaneously in the LED array to illuminate the sample during each image acquisition. The imaging lens receives light issuing from the sample and the light detector received light transferred from the imaging lens. To acquire each image, the light detector receives photons and samples intensity measurements for an exposure time while a single LED pattern is illuminated. During each process cycle, the light detector acquires a first set of lower resolution images during illumination by a sequence of LED patterns. In some cases, the processor determines the LED patterns and exposure time based on a maximum processing time and/or minimum signal-to-noise ratio (SNR). For example, an operator may provide tuning input with one or more of a maximum processing time and a minimum SNR. In one case, the processor can determine an exposure time that will keep the total processing time during the cycle below the maximum processing time and/or LED patterns that will cause the images acquired to have an SNR above the minimum SNR. After capturing the first set of lower resolution images, a weighted sum operation of the first image data set is performed to re-create a second image data set that would have been captured had a single LED been turned on at each image acquisition time. After this weighted sum operation, a high resolution amplitude and phase map of the image sample can be reconstructed based on the second data set. Details of reconstruction processes that can be used are found in Section III, in Zheng, Guoan, Horstmeyer, Roarke, and Yang, Changhuei, "Wide-field, high-resolution Fourier ptychographic microscopy," Nature Photonics, vol. 7, pp. 739-745 (2013), and in U.S. Patent Application 14/065,280, titled "Fourier Ptychographic Imaging Systems, Devices, and Methods" and filed on October 28, 2013.

Data capture for standard Fourier ptychography imaging techniques is generally performed by illuminating one LED at a time from within a large array of *N* LEDs, and acquiring a digital image for each illuminated LED based on a specific incidence angle. Where N may be several hundred LEDs, the data capture process can be time consuming. For example, a standard Fourier ptychography imaging system that uses 225 LEDs to take 225 images with a 1 second exposure time would have total image acquisition time of 225 seconds.

Instead of turning on a single LED for each image acquired, a multiplexed Fourier Ptychographic imaging system of embodiments uses multiplexed illumination. The system is designed with an LED array assembly that can turn on any LED in the LED array to turn on unique patterns of a sequence of LED patterns. In one example, the LED patterns may have up to ½ or 3/4 of the total number of LEDs for each image. After capturing N different images, each under illumination from a unique pattern, it is possible to linearly combine the resulting images to generate a second data set that would have captured had individual LEDs been illuminated in the array. Since, however, each image is illuminated with light that much brighter than when using just a single LED, a much shorter exposure time per image can be used resulting in a much faster data acquisition process.

In certain aspects, multiplexed Fourier Ptychographic imaging systems and methods are configured to improve the rate at which high resolution images are generated since the exposure time can be reduced significantly for the same noise. As discussed above, certain standard Fourier Ptychographic imaging techniques are based on turning on a single LED at each acquisition time to illuminate the sample from a single incidence angle. The multiplexed Fourier Ptychographic imaging technique turns on multiple LEDs simultaneously in a unique pattern during each image acquisition. In order to provide patterned illumination, the multiplexed Fourier Ptychographic imaging system includes an LED array assembly with circuitry and processor designed for independent control of each LED in the array so that any of the LEDs can be turned on simultaneously to illuminate unique patterns. Since each low-resolution image is based on significantly more photons received at the light detector, the noise is reduced for each image acquired. Since this is the case, the multiplexed Fourier Ptychographic imaging system can reduce the exposure time significantly while maintaining the same noise. Reducing the exposure time at each image acquisition reduces the overall processing time. The amount of noise is based on the number of LEDs illuminated in each pattern. In some aspects, the system is tunable to adjust the processing time by selecting a particular exposure time and/or to adjust the SNR by selecting a particular sequence of LED patterns. For example, an operator of the system can provide tuning input to keep the processing time below a processing time provided by the operator and also keep the noise below a particular level associated with an SNR. For example, a multiplexed Fourier ptychography imaging system that uses 225 LEDs to take 225 images can simultaneously turn on 113 of the 225 LEDs for each unique pattern during image acquisition. While maintaining the same amount of noise, exposure time can be reduced by a factor of sqrt (225)/2 = 7.5. That is, if the original exposure time is 1 second per acquisition using 1 LED illuminated at each acquisition, the new exposure time used by the multiplexed Fourier Ptychographic imaging system can be reduced to 1/7.5 = 0.13 seconds while maintaining the same noise. In this case, the total image acquisition time can be reduced from 225 to 225*0.13 seconds = 30 seconds.

## I. Multiplexed Fourier Ptychographic imaging systems

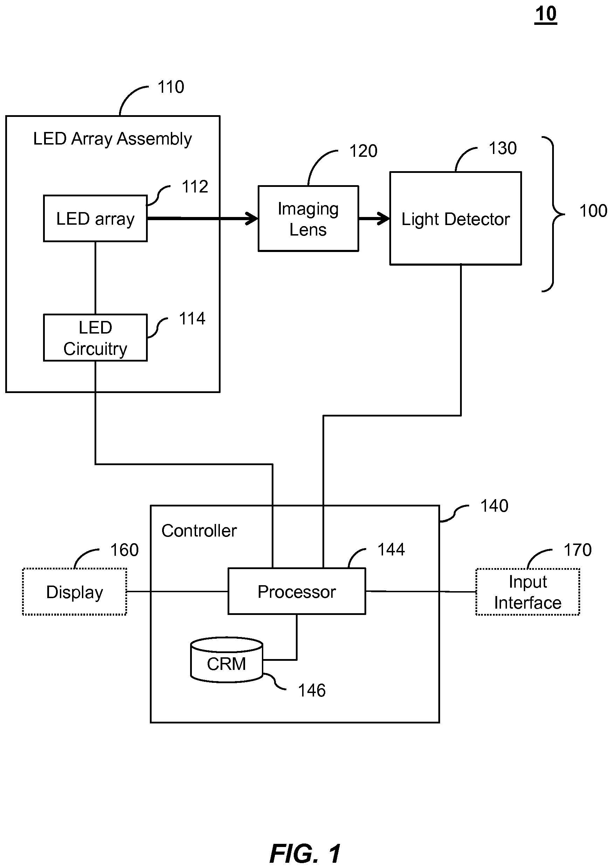

FIG. 1 is a block diagram of components of a Multiplexed Fourier ptychographic imaging system 10, according to embodiments. The system 10 includes an image collection assembly 100 comprising an LED array assembly 110, an imaging lens 120, and a light detector 130 for taking intensity measurements. The LED array assembly 110 comprises an LED array 112 configured to illuminate a sample (not shown) being imaged and circuitry 114. The system 10 also includes a controller 140 having a processor 144 and a CRM (i.e. computer readable medium) 146, an optional (depicted by dotted line) display 160, and an optional (depicted by dotted line) input interface 170. The LED circuitry 114 is in electrical communication with the LED array 112 and the processor 144 of the controller 140. The LED circuitry 114 is configured to provide power to independently turn on each LED in the LED array 112. The processor 144 determines the sequence of LED patterns and sends control signals through the circuitry 114 to the LED array 112 illuminate the sequence of LED patterns. The arrow between the LED array 112 and imaging lens 120 depicts that the imaging lens 120 is located to receive light issuing from the sample illuminated by coherent light from the LED array 112. The arrow between the imaging lens 120 and the light detector 130 depicts that the light detector 130 is configured to receive light issuing from the sample as transferred from the imaging lens 120. The light detector 130 sequentially captures a first set of lower resolution images of the sample illuminated by the sequence LED patterns where each low-resolution image is based on intensity measurements taken over an exposure time. As used herein, an exposure time generally refers to a duration of time during which a light detector collects photons, integrates the total energy from the collected photons into an electric potential, and uses this potential as a measure of intensity at each discrete light detecting element (e.g., pixel) to form the image data that comprises a single lower resolution image.

The Multiplexed Fourier ptychographic imaging system 10 includes a processor 144 and a CRM 146, an optional display 160, and an input interface 170. In one example, one or more of these components may be part of a single computing device such as, for example, a smartphone, laptop, desktop, tablet, etc. The optional display 160, optional input interface 170, and CRM 146 are all in communication with the processor 144. The processor 144 of controller 140 determines the sequence of LED patterns and exposure time to use during image acquisition and also generates a high-resolution image from the intensity data of the first set of lower resolution images acquired by the light detector 130. The processor 144 is also in communication with the light detector 130 and the LED circuitry 114 to send a control signals to synchronize the illumination of the LED patterns with the exposure times for acquiring the first set of lower resolution images with the illumination times of the sequence of LED patterns. That is, the processor 144 sends control signals to the LED array 112 through the LED circuitry 114 with instructions to illuminate the sequence of LED patterns. The processor 144 sends control signals to the light detector 130 to receive photons for exposure times while the LED array is illuminated by the sequence LED patterns.

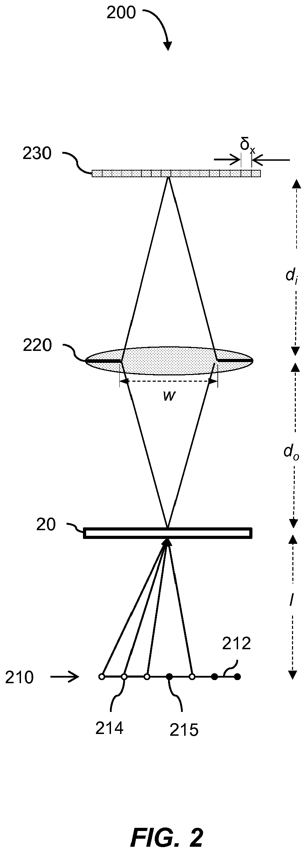

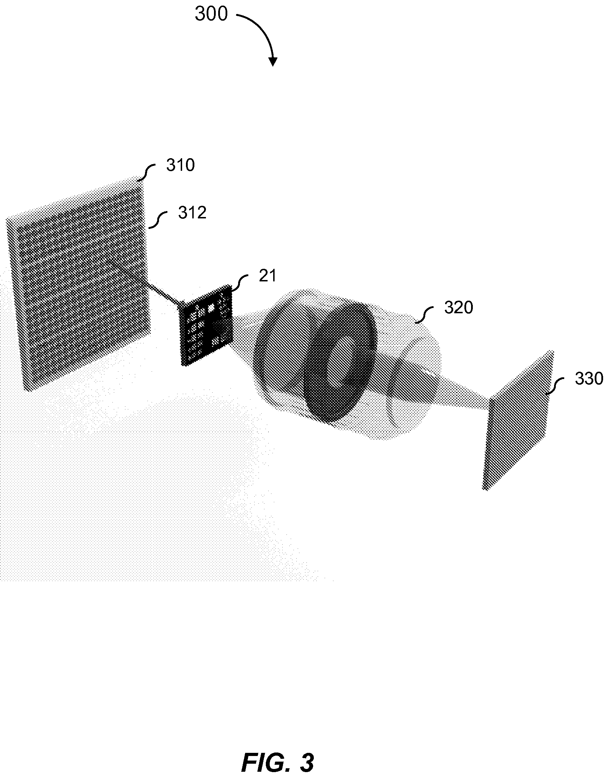

FIGS. 2 and 3 are schematic drawings of components of image collections assemblies that may be used in a Multiplexed Fourier ptychographic imaging system such as the system shown in FIG. 1. FIG. 2 is a schematic drawing of a side view of an image collection assembly 200, according to an embodiment. The image collection assembly 200 comprises an LED array assembly 210 with an LED array 212 located to illuminate a sample 20, an imaging lens 220, and a light detector 230 for measuring intensity from photons received at its active sensing surface. In this example, the image collection assembly 200 is arranged in trans-illumination mode directing illumination through the sample being imaged while the imaging lens 220 receives light transmitted through the sample 21. In this illustrated example, the LED array 212 is one-dimensional LED array with seven LEDs. In this illustration, an LED pattern is shown with four illuminated LEDs 214 and three non-illuminated LEDs 215. During image acquisition, the LEDs receive control instructions though circuitry (not shown) from a controller (not shown) and execute the control instructions to illuminate a sequence of LED patterns. The system 200 further comprises an imaging lens 220 that receives and accepts light based on its NA issuing from the illuminated sample 20. In certain cases, the imaging lens 220 is located at a Fourier plane of the sample plane. The light detector 230 receives illumination transferred from the imaging lens 220 and measures intensity data for an exposure time to capture each low-resolution image. During an image acquisition operation, the light detector 230 measures intensity data to acquire a first set of lower resolution images while the sample 20 is illuminated by a sequence of illuminated LED patterns.

**FIG. 3** is a schematic drawing of a perspective view of an image collection assembly **300,** according to an embodiment. The image collection assembly **200** comprises an LED array assembly **310** with an LED array **312** configured to illuminate a sample **22,** an imaging lens **320** (e.g. objective lens), and a light detector **330**. The LED array **312** is a two-dimensional LED array (20 x 20) with 400 LEDs. An arrow is depicted showing the angle of illumination of a particular LED in the array **312**. During operation, the LEDs receive control instructions though circuitry (not shown) from a controller (not shown) and execute the control instructions to illuminate a sequence of LED patterns. The imaging lens **320** receives and accepts light based on its NA issuing from the illuminated sample **21**. In certain cases, the imaging lens **320** is located at a Fourier plane of the sample plane. The light detector **330** receives illumination transferred from the imaging lens **320** and measures intensity data for an exposure time to capture each low-resolution image. During an image acquisition operation, the light detector **330** measures intensity data for a sequence of lower resolution images while the sample **21** is illuminated by a sequence of illuminated LED patterns.

According to certain aspects, the components of the image collection assembly may be arranged to operate in either trans-illumination mode (i.e. imaging lens collecting light transmitted through the sample) or in reflective mode (i.e. light reflected from the sample is collected at the imaging lens). In **FIG. 2,** for example, the components of the image collection assembly **200** are arranged to operate in trans-illumination mode where the LED array **212** and imaging lens **220** are located to direct illumination through the sample **20** while the imaging lens **220** receives light transmitted through the sample **20**. To operate in reflection mode, the LED array and imaging lens would be located to direct illumination toward the sample and the imaging lens located to receive light reflected from the sample.

During a typical cycle of a Multiplexed Fourier ptychographic imaging system, a processor determines a sequence of LED patterns to illuminate during image acquisition by the light detector. The processor also determines an exposure time for the light detector to receive photons and measure intensity values for each image acquisition. The processor sends control signals to both the light detector and to the LED array with control data to synchronize the illumination of each LED pattern with image acquisition. The processor may send control data comprising, for example, one or more of a start time for the image acquisition operation, the determined exposure time for each image acquisition and corresponding duration of illumination of each LED pattern, and the number of images acquired, and data for illuminating the determined sequence of LED patterns. During image acquisition, the processor independently controls through the circuitry each LED in the LED array to turn on LEDs in the sequence of LED patterns. The imaging lens receives light issuing from the sample and transfers light to the light detector. The light detector receives photons and samples intensity measurements during the determined exposure time while each LED pattern is illuminated. During the image acquisition process of each cycle, the light detector sequentially captures a first set of lower resolution images of the sample while the sample is being illuminated by the determined sequence of LED patterns. The processor performs a weighted sum operation on the first image data set to re-create a second image data set that would have been captured had a single LED been turned on at each image acquisition time. The processor reconstructs a high resolution amplitude and phase map of the image sample using the second image data set.

Generally, a sample can comprise one or more objects of interest. For example, a sample may be a biological specimen with one or more cells or cell organelles. As another example, the sample may be a semiconductor wafer. In some cases, the one or more objects in the sample are thin and/or translucent.

In certain aspects, the Multiplexed Fourier ptychographic imaging system comprises an LED array assembly comprising an LED array and LED circuitry. The LED circuitry provides electrical communication between each LED in the LED array and a processor, for example, of a controller. That is, the processor is electrically connected through the LED circuitry to the LED array to be able to send control signal(s) to turn on LEDs of each LED pattern in the sequence of LED patterns.

The LED array assembly comprises an LED array with $n$ x $m$ dimensions for providing illumination. The LED array can be a one-dimensional array (1 x $m$ where $n$ = 1) or a two-dimensional array of discrete LEDs. Some examples of dimensions of the LED array are 6 x 6, 7 x 7, 8 x 8, 9 x 9, 10 x 10, 32 x 32, 50 x 50, 20 x 20, 30 x 30, 60 x 60, 100 x 100, 50 x 10, 20 x 60, 1 x 10, 1 x 7, 1 x 20, 1 x 30, etc. Other dimensions may be used. Each LED in the LED array can be approximated as a point light emitter. Although, the LED array is described in many cases as a single LED at each location of the array, each location may have multiple LEDs in some cases. For example, each location in the array may have blue, green, and red LEDs. In some cases, the LEDs provide visible light wavelengths. In other cases, the LEDs provide ultraviolet light wavelengths. In other cases, the LEDs provide infrared light wavelengths.

In certain aspects, a Multiplexed Fourier ptychographic imaging system comprises an LED array assembly with LED circuitry that can provide power (e.g., voltage) to any combination of LEDs in the LED array simultaneously, without needing to vary the power delivered to each LED over time while it is in the "on" state. In other words, the LED circuitry can simultaneously provide a constant power (i.e., voltage) to any and all LEDs within the array that must be in the "on" state. That is, the LED circuitry is designed to allow for independent control of turning on/off any combination of LEDs in the array simultaneously. In one example, the LED circuitry includes an electrical connection (e.g. wire) between each LED and the processor.

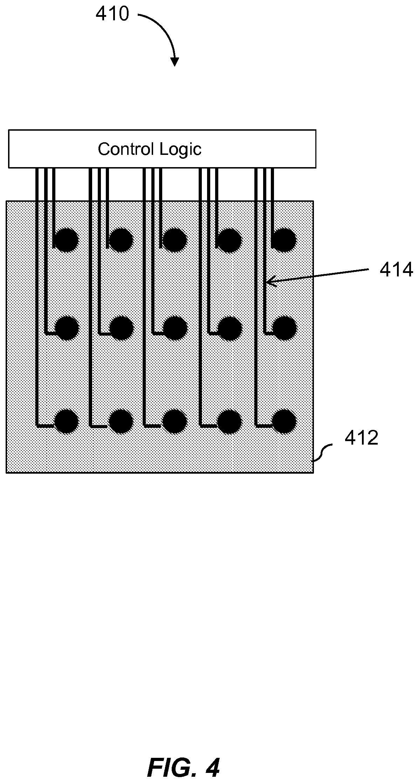

**FIG. 4** is a schematic drawing of an LED array assembly **410** with LED circuitry **412** that can simultaneously provide a constant power (i.e., voltage) to any and all LEDs within the LED array that must be in the "on" state, according to an embodiment. The LED array assembly **410** comprises a 3 x 5 LED array **412** and individually addressed LED circuitry **414**. The arrow indicating LED circuitry **414** points to a single wire in the LED circuitry **414** but it would be understood that there are 15 wires in this illustrated LED circuitry **414**. As shown, the LED circuitry **414** includes a single wire between each LED in the array **412** and the control logic of the controller (e.g., microcontroller). Single wires provide the ability to control DC voltage/current to each LED individually. That is, the LED array **412** is an individually addressed array.

Conventional LED arrays are typically designed with electrical connections to turn on a single LED at a time where each LED is controlled by setting values to its associated row and column. Such LED arrays are often referred to as multiplexed displays. A related form of display is often referred to as a charlieplexed display. For example, in one conventional LED array, often referred to as a dot-matrix display with a dot-matrix controller, the rows are connected to LED anodes of a microcontroller and the columns are connected to LED cathodes of the microcontroller. To turn on any of the LEDs in a column, the column needs to be on a low setting (i.e., a low voltage). To turn on any of the LEDs in a row, the rows needs to be in the high setting (i.e., a high current). If the row and column are both set to high or both set to low, no voltage flows through the LED and it does not turn on. To control an individual LED, the column is set to low and the row too high. To control multiple LEDs in a row, the row is set to high then the columns are set to low or high as appropriate to turn on respective LEDs over time. This conventional LED array does not have the ability to turn on an arbitrary group of LEDs simultaneously, since they do not have independent control of each LED. That is, the control of an LED is dependent on the row and column setting and not an individual LED. For example, this conventional LED array would not be capable of turning on LEDs along a diagonal of the array, since this will require all of the rows to be set to a low voltage and all of the columns to be set to a high voltage in our example, which will cause all of the LEDs in the array to turn on, instead of just the LEDs along the diagonal, as desired.

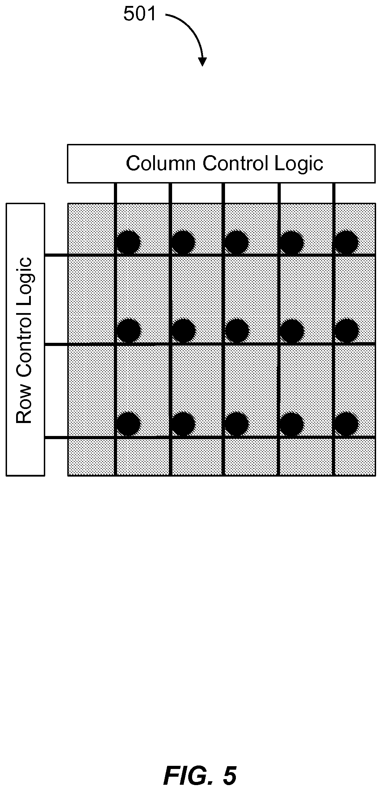

**FIG. 5** is a schematic drawing of an LED array assembly **501** with a 3 x 5 row/column addressed LED array. In this example, the circuitry is designed to control the DC voltage/current only along the entire row/column.

Since conventional LED arrays (e.g., dot-matrix displays or charlieplexed displays) cannot turn on any group of LEDs in the LED array, they often turn on each LED in the desired pattern individually and very quickly (i.e., within less than 30 milliseconds, which is the approximate integration time of the human eye). While this is helpful for displaying content in the LED display to a user, it is not helpful for delivering a constant amount of optical power over time from each LED to evenly illuminate, e.g., a specimen for multiplexed illumination.

In certain aspects, a Multiplexed Fourier ptychographic imaging system comprises an imaging lens for collecting light issuing from the sample. Typically, the imaging lens is located at a Fourier plane of the sample plane. The imaging lens may be, for example, an objective lens that only accepts light within a range of incidence angles based on its numerical aperture (NA). In one case, the imaging lens is an objective lens with an NA of about 0.08. In another case, the imaging lens is an objective lens with an NA in the range between about 0.01 and about 0.1.

In certain aspects, the Multiplexed Fourier ptychographic imaging system comprises a light detector having a two-dimensional grid of equally spaced discrete detecting elements (e.g., pixels). During each exposure time, the light detector collects photons, integrates the total energy from the collected photons into an electric potential, and uses this potential as a measure of intensity at each discrete light detecting element (e.g., pixel) to form the image data that comprises a single lower resolution image. The light detector generates a signal(s) with lower resolution images of image data of the intensity distribution measured by the grid of discrete light detecting elements during the cycle. If visible light radiation is being used to illuminate the sample, the light detector may be in the form of a charge coupled device (CCD), a CMOS imaging sensor, an avalanche photo-diode (APD) array, a photo-diode (PD) array, a photomultiplier tube (PMT) array, or like device. If using THz radiation is used, the light detector may be, for example, an imaging bolometer. If X-ray radiation is used, the light detector may be, for example, an x-ray sensitive CCD. These examples of light detectors and others are commercially available. In some aspects, the light detector may be a color detector e.g., an RGB detector. In other aspects, the light detector may be a monochromatic detector.

In certain aspects, a Multiplexed Fourier ptychographic imaging system comprises one or more processor (e.g., microprocessors) that receives instructions stored on a CRM and executes the instructions to perform one or more functions of the system. For example, the processor may execute instructions stored on the CRM to perform one or more of: 1) interpreting image data, 2) reconstructing a higher resolution image, 3) generating a second set of lower resolution image data from a first set of lower resolution image data, 4) providing display data for displaying one or more images or other output on the display, and 5) determining a sequence of LED patterns, an exposure time, control instructions for turning on LEDs in the form of LED patterns in the LED array, and/or other operations performed during one or more operations of the Multiplexed Fourier ptychographic imaging method described in **Section II**. The processor may be connected directly or indirectly through other devices to one or more power supplies. The one or more power supplies may be internal and/or external to the system.

In certain aspects, a Multiplexed Fourier ptychographic imaging system comprises a processor that send control signals to the LED array and/or the light detector. In some cases, these control signals synchronize the illumination of the sequence of LED patterns with the exposure times for acquiring the first set of lower resolution images. For example, the processor may send control signals to the LED array through the LED circuitry with instructions to illuminate the sequence of LED patterns and control signals to the light detector to receive photons for exposure times while the LED array is illuminated by the sequence LED patterns. The processor may also determine the sequence of LED patterns and exposure time to use during image acquisition and/or generate a high-resolution image from the first set of lower resolution images acquired by the light detector.

In certain cases, a processor can send control signals through LED circuitry to the LED array to illuminate a sequence of LED patterns. In these cases, the controller can independently control any combination of LEDs in the LED array to turn on the LEDs of each LED pattern of the sequence. The processor can also generate a high resolution image from the first of lower resolution images collected during illumination by the sequence of LED patterns. The controller may also provide display data to a display and/or may process signals with input from an input interface.

In certain aspects, a Multiplexed Fourier ptychographic imaging system comprises a CRM (e.g., memory) is in communication with one or more processors to receive data and sending data stored on the CRM. In addition to storing instructions for performing certain functions of the system, the CRM can also store lower resolution image data (first set and/or second set), higher resolution image data, input from an operator or other entity, and other data used by the system. For example, the CRM may store different sequences of LED patterns and exposure times that correspond to certain SNR levels and/or processing times. In other cases, the CRM may store instructions for calculating a sequence of LED patterns and/or an exposure time based on a particular processing time and/or a particular SNR. Alternatively, for example in the case of using Hadamard multiplexing, the CRM may store a look-up table. This look-up table may contain a list of possible number of images to acquire, ranging from 1 to $N$, where $N$ can be as large as 1000 or more. For each value of $N$, the look-up table will contain a unique list of $N$ different LED patterns (i.e., a list of which LEDs to turn on within the LED array and which should remain off, for each image to be captured). The look-up table might also contain a list of exposure times for each image to be captured.

In some aspects, a Multiplexed Fourier ptychographic imaging system comprises a display in communication with the processor to receive data for displaying images and other output on the display to, for example, an operator of the system. The display may be a color display or a black and white display. In addition, the display may be a two-dimensional display or a three-dimensional display. In one embodiment, the display may be capable of displaying multiple views.

In some aspects, a Multiplexed Fourier ptychographic imaging system comprises an input interface. The input interface refers to a device capable of receiving input from an operator of the system. For example, an input interface may be a keyboard, a touch screen, a microphone, etc.

## A. Sequence of LED Patterns

In certain aspects, the multiplexed Fourier Ptychographic imaging system uses an LED array assembly to turn on multiple LEDs in the LED array in a sequence of LED patterns. During illumination by each LED pattern, the system captures a lower-resolution image. Although LED patterns are described in certain examples herein with respect to a square LED array having N LEDs ($N = n$ x $n)$, other LED arrays may be used.

By illuminating patterns of LEDs during each cycle, a Multiplexed Fourier ptychographic imaging system can speed up image acquisition significantly from conventional techniques by reducing exposure time while maintaining the same SNR within each image acquired. When using a square LED array, for example, the exposure time of each image acquisition (and the total duration of the image acquisition process) can be reduced by up to a factor of approximately sqrt($N$)/2 for a fixed SNR within each image acquired, where again N is the number of LEDs in the array and sqrt() denotes a square root operation. From the theory of Hadamard multiplexing, the exact exposure reduction is [sqrt($N$)+(1/sqrt($N$)]/2, which approaches the above approximation for large N, and assumes the predominant source of noise effecting the SNR is statistically independent and additive. Put another way, if the system can use the same image exposure time as would have been used when turning on a single LED, then the SNR of each detected image will be improved by the same sqrt($N$)/2 factor when multiplexing is used and when the noise is independent and additive. In some aspects, the system can take advantage of this flexibility by adjusting the exposure time and LED patterns to tune the system to a particular processing time and SNR combination. After data capture of a first set of N images using the illuminated LEDs arranged in patterns, the system performs a weighted sum of the $N$ images to produce a second set of images that is analogous to what is captured when a single LED is on at each acquisition time.

Generally, the sequence of LED patterns comprises unique patterns. In most cases, each LED pattern comprises at least one LED turned on at a time. In one aspect, each LED pattern comprises less than or equal to 3N/4 LEDs turned on at a time. In one aspect, each LED pattern turns on up to half of the LEDs in the array during each image acquisition. In the case of a square LED array, each LED pattern turns on up to $N$/2 of the LEDs in the array for each image. In another aspect, each LED pattern turns on up to a quarter of the LEDs in the array for each image acquired. In the case of a square LED array, each LED pattern turns on up to $N/4$ of the LEDs in the array for each image. In another aspect, each LED pattern turns on more than a quarter of the LEDs in the array for each image acquired. In another aspect, each LED pattern turns on more than a quarter of the LEDs in the array for each image acquired. Typically, multiplexing requires that more than 1 LED is turned on at a time. In one example, a LED pattern has less than or equal to $3N/4$ LEDs turned on at a time.

In some cases, the number of unique patterns in the sequence is determined by the number of LEDs that will be illuminated in the LED array or the number of images that will be acquired. In one example that uses a square (n x n) LED array, the number of unique patterns in the sequence is $N$ ($N = n \times n$). The number of unique patterns in the sequence is $N$ and the sequence of LED patterns together form an N x N matrix, which can be stored and accessed appropriately as a look-up table for selecting the correct set of patterns for a given value of $N$. It is possible that the number of unique patterns may also be less than $N$, when using modified versions of the Hadamard code are used (i.e., which might take into account uneven illumination at the sample plane, LED sources that do not turn completely off, or LED sources that offer a coupled output).

In one aspect, the LED patterns in the sequence are defined by a "Hadamard" pattern also referred to as "Hadamard" code. In the case of a one-dimensional LED array (n x 1), the number of unique patterns in the sequence is $n$ and the sequence of LED patterns together form an $n \times n$ "Hadamard" matrix for a signal of length $n$.

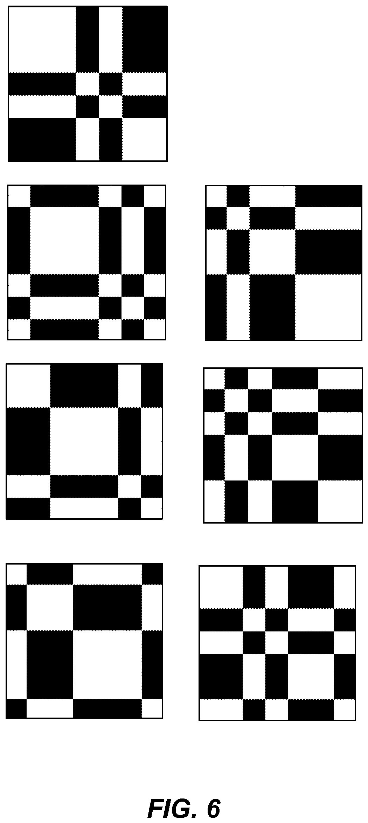

**FIG. 6** is a drawing of seven 2D Hadamard LED patterns out of a sequence of 49 different 2D Hadamard patterns for a 7 x 7 LED array, according to an embodiment. In case, $n = 7$ and $N=n \times n=49.$ In the drawing, a white entry denotes that the associated LED is turned on, and the black entry denotes that the LED is off.

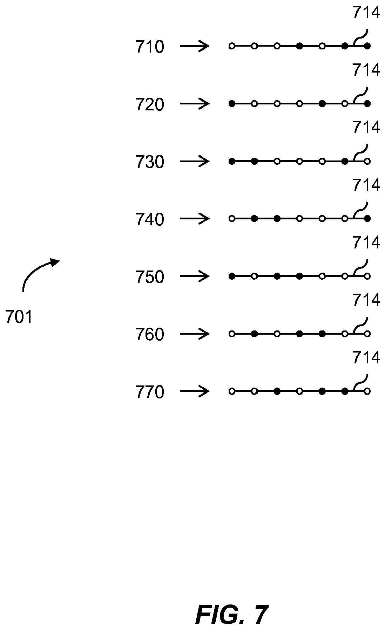

**FIG. 7** is a schematic illustration of a sequence of LED patterns **701** of illumination by a one-dimensional LED array **714** that can be used to acquire seven low-resolution images in a multiplexed Fourier Ptychographic imaging system, according to an embodiment. In this particular example, the LED array **714** has seven LEDs and seven illumination patterns **710**, **720**, **730**, **740**, **750**, **760**, **770** are used in the sequence ($N=7$). Although the example is shown for simplicity based on a one-dimensional LED array, extension to patterns for a two dimensional LED array are direct. One simple way of forming the associated 2D Hadamard patterns from their 1D counterparts is to first define a Hadamard pattern for the value n, or the number of LEDs that will be used along one dimension of the LED array. Then, one should set all values in the pattern vector to -1. For example, *if n=7,* then for the first pattern, s = [1 1 1 0 1 0 0], and thenform s'= [1 1 1 -1 1 -1 -1]. Next, one should compute the outer product of s' with itself to form $s_{2D}$' = s'*s', where * denotes an outer-product. $s_{2D}$' is a 7x7 matrix that contains +1's and - 1's in its entries. Finally, the associated 2D pattern $s_{2D}$ is found by setting all of the entries in $s_{2D}$' that are -1 to 0, and leaving all of the entries that are +1 unchanged.

In this example, the patterns in the sequence are Hadamard patterns based on a cyclic permutation of the vector, s = [1 1 1 0 1 0 0]. The first pattern of LEDs **710** turned on will match s (first, second, third, and fifth LED turned on). The second pattern of LEDs **720** turned on will match [0 1 1 1 0 1 0] which is shifted to the right by one. The third pattern of LEDs **730** will match [0 0 1 1 1 0 1] which is shifted from the right by one and so on. The fourth pattern of LEDs **740** will match [1 0 0 1 1 1 0] which is shifted from the right by one and so on. The fifth pattern of LEDs **750** will match [0 1 0 0 1 1 1] which is shifted from the right by one and so on. The sixth pattern of LEDs **760** will match [1 0 1 0 0 1 1] which is shifted from the right by one and so on. The seventh pattern of LEDs **770** will match [1 1 0 1 0 0 1] which is shifted from the right by one and so on. In the case of displaying a pattern on an LED array in two dimensions, the above method of shifting to the right by one may be generalized to shifting a two-dimensional pattern of LEDs sequentially to the right by one column, and down by one row. Although Hadamard patterns are used, other patterns can be used based on permutations of other s vectors. The first related example takes its patterns from the Walsh matrix, which is a rearranged version of the Hadamard S matrix. For a second example, in some applications, it might be beneficial to select the LED patterns at somewhat at random. One example of a random sequence in the above simple example is [0 1 1 0 0 1 0], [0 0 0 1 0 1 0], [1 1 1 0 1 0 1], [1 0 1 1 1 0 0], [0 1 0 0 0 0 1], [1 0 1 1 1 1 0 0], [0 1 0 1 0 0 0 0]. In other applications, it might be beneficial to select the LED patterns as a slightly modified version of the Hadamard pattern sequence, e.g. by always leaving the middle three entries at a lower total optical power than the LEDs at the remaining locations. If we let the entries within the vector s denote the amount of optical power that is emitted from each LED, then the example sequence, $s_1$ = [1 1 .5 0 .5 0 0] as the first pattern, $s_2$=[0 1 .5 .5 0 1 0] as the second pattern, $s_3$=[0 0 .5 .5 .5 0 1], $s_4$=[1 0 0 .5 .5 1 0], $s_5$=[0 1 0 0 .5 1 1], $s_6$=[1 0 .5 0 0 1 1], and $s_7$=[1 1 0 .5 0 0 1] might be beneficial.

After the multiplexed Fourier Ptyochographic imaging system captures a first image set of 7 lower resolution images $I = [I_1, I_2, .., I_7]$ based on the seven LED patterns shown in **FIG. 7**, the system can generate a second set of lower resolution images as if only one LED were turned on during each image acquisition. Here, $I$ is a matrix that contains each detected image in one of its columns. For the case of two-dimensional images, each column of $I$ contains the reshaped version of each two-dimensional image into a one-dimensional vector.

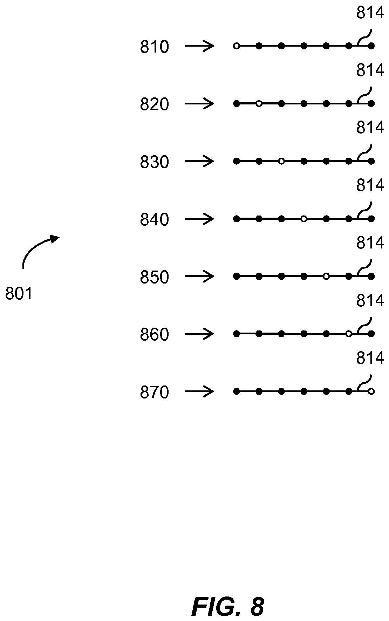

**FIG. 8** is a schematic illustration of illuminations **801** by a one-dimensional LED array 814 with seven LEDs where only one LED is turned on during each image acquisition, according to an embodiment. In this illustrated example, the sequence of LED patterns **801** includes illumination patterns **810**, **820**, **830**, **840**, **850**, **860**, **870** that sequentially illuminate a single LED in the array at each acquisition time.

After the system captures the seven images based on the seven LED patterns shown in **FIG. 7**, the images can be linearly combined to re-create a second set of images based on the illumination patterns shown in **FIG. 8**, but with lower noise (for the same exposure time). To generate the second set of lower resolution images, the multiplexed Fourier Ptychographic imaging system performs a weighted sum operation on the first set. In one example, the system performs the weighted sum operation by first defining a combination vector, R, associated with the LED array dimensions. For example, for the one-dimensional LED array with seven LEDs, the combination vector $R$ = [1 1 1-1 1-1 -1]/4. Next, the multiplexed Fourier Ptychographic imaging system determines the matrix product $L_1 = IR$. $L_1$ is our desired image formed from the first LED in the LED array. $L_j$, the image formed as if just the $j^{th}$ LED were turned on, is given as a matrix product between the matrix $I$ and the j$^{th}$ cyclic permutation of $R$.

The s vector of LEDs and the vector R are defined by various methods. In one example, both vectors s and R can be determined using a Hadamard code. In the LED patterns shown in **FIG. 4**, for example, both vectors s and R were determined using a Hadamard code for n=7. Details of the Hadamard code can be found in Schechner, Y. Y., Nayar, S. K., and Belhumeur, P. N. "Multiplexing for optimal lighting," IEEE PAMI27, 1339-1356 (2007). In the presence of non-additive noise, other methods may be preferred over the Hadamard code. Other sets of LEDs (i.e., random combinations) may also be a good candidate. An example of multiplexed illumination can be found in Tian, L., Li, X., Ramchandran, K., Waller, L., "Multiplexed coded illumination for Fourier ptychography with an LED microscope," Biomedical Optics Express 5(7), pp. 2376-2389 (2014). Another example may be to use random illumination sequences, in which case approximately $N/2$ of the LEDs within the array are turned on for each image, but these $N/2$ LEDs are selected uniformly at random. Finally, it may be beneficial to turn on some LEDs in the array more brightly than other LEDs within the array during the multiplexing. If we let the entries within the vector s denote the amount of optical power that is emitted from each LED, then it might be beneficial in some implementations to weight the optical power emitted from the center LEDs as less than the optical power emitted from the LEDs at the edges. In which case, the example sequence $s_1$ = [1 1 .5 0 .5 0 0] as the first pattern, $s_2$=[0 1 .5 .5 0 1 0] as the second pattern, $s_3$=[0 0 .5 .5 .5 0 1], $s_4$=[1 0 0 .5 .5 1 0], $s_5$=[0 1 0 0 .5 1 1], $s_6$=[1 0 .5 0 0 1 1], and $s_7$=[1 1 0 .5 0 0 1]. Here, the center 3 LEDs remain at an optical power less than the LEDs at the side.

In many aspects, each LED pattern in a sequence of LED patterns includes a number of LEDs equal to at least half the total number of LEDs in the LED array. In one example, the number of LEDs in an LED pattern is half the total number of LEDs in the LED array. In another example the number of LEDs in an LED pattern is more than half the total number of LEDs in the LED array. In another example, the number of LEDs in an LED pattern is more than 55% of the total number of LEDs in the LED array. In another example, the number of LEDs in an LED pattern is more than 60% of the total number of LEDs in the LED array. In another example the number of LEDs in each LED pattern of a sequence of LED patterns is at least half the total number of LEDs in the LED array. In another example, the number of LEDs in each LED pattern of a sequence of LED patterns is in the range of 50% to 70% of the total number of LEDs in the LED array.

Generally each LED pattern in the sequence of LED patterns is a unique formation of illuminated LEDs. During image acquisition, each LED pattern is illuminated during the exposure time while the light detector receives photons to acquire a lower resolution image. The LED patterns can be based on certain permutations of a vector(s). In other cases the LED patterns may be random combinations of LEDs. In this case, the LED patterns may be based on a random number generation output, for example.

## B. Tunable Processing Time and/or SNR

In certain aspects, a Multiplexed Fourier ptychographic imaging system can be tuned to operate with a lower than specified processing time and/or a higher than specified minimum SNR. In some cases, the system is tuned based on tuning input of a maximum processing time and/or a minimum SNR level received from, for example, an operator of the multiplexed Fourier Ptychographic imaging system. Although typically an operator refers to one or more persons, an operator could also be a program receiving high resolution data and providing tuning input. In one case, the tuning input is entered by an operator through an interface such as, for example, the external interface. Generally, the processing time refers to the duration of time for acquiring the lower resolution images during a cycle.

To determine the LED patterns, the system may first determine the number of LEDs that are needed in the LED patterns to generate at least the minimum SNR. For example, the processor may determine the number of LEDs to use in each LED pattern based on the minimum SNR value for a fixed exposure time. As discussed above, when using a square LED array, the SNR of an image will be improved by a factor of sqrt($N$)/2 when illuminating N LEDs in a square LED array. Using a known SNR value for illumination by a single LED ($SNR_0$) in the array, the processor can determine the number of LEDs to use in each pattern as: $SNR_0$/sqrt($N$)/2. The processor may then determine the exposure time based on: (processing time)/ ($N$ number of images acquired). Once the number of LEDs are selected, the LED patterns may be selected based on various techniques. In one example, the LED patterns may be randomly generated unique patterns. In another example, the patterns may be based on permutations of various vectors. In one case, the LED patterns may be based on permutations of Hadamard code.

Modifications, additions, or omissions may be made to Multiplexed Fourier ptychographic imaging systems without departing from the scope of the disclosure. In addition, the components of the Multiplexed Fourier ptychographic imaging systems may be integrated or separated.

## II. Multiplexed Fourier ptychographic imaging method

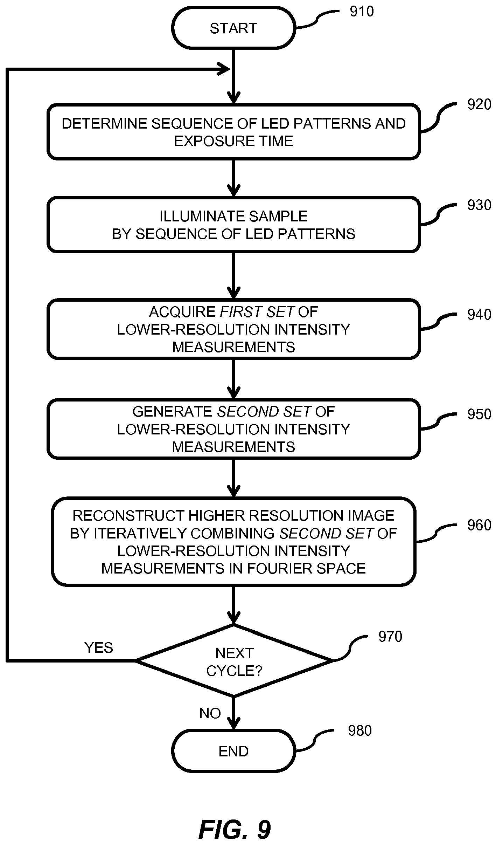

FIG. 9 is a flowchart of a Multiplexed Fourier ptychographic imaging method, according to embodiments. At 910, the Multiplexed Fourier ptychographic imaging method starts its first cycle. The number of lower resolution images, N, acquired during each cycle is equal to the number of illuminating LEDs in the array. In the description of this method, a square array is used and the number of illuminating LEDs is: $N = n \; x \; n$.

At operation 920, a sequence of LED patterns and exposure time are determined for use in one or more operations of the cycle. In one example, the same sequence and/or exposure time are used from a prior cycle.

In some aspects, the processor may determine the number of LEDs in the patterns to use in the cycle. In one aspect, each LED pattern has up to half of the LEDs in the array. In another aspect, each LED pattern has up to a quarter of the LEDs in the array. In yet another aspect, the processor may determine the number of LEDs to use in each LED pattern based on a particular SNR value for a fixed exposure time. That is when using a square LED array, the SNR of an image will be improved by a factor of sqrt($N$)/2 when illuminating N LEDs in a square LED array. Using a known SNR value for illumination by a single LED (SNRo), the processor can determine the number of LEDs to use in each pattern as: $SNR_0$/sqrt($N$)/2.

In some aspects, the process may then determine an exposure time to use based on a maximum processing time and a fixed SNR. The processor may determine the exposure time based on: (processing time)/ ($N$ number of images acquired).

In some cases, the particular values of the processing time and/or SNR may be a provided as tunable input from an operator or other entity. For example, the value of the processing time may be a maximum processing time entered by the operator and/or the value of the SNR may be a minimum SNR entered by the operator.

Once the number of LEDs are selected, the LED patterns may be selected based on various techniques. In one example, the LED patterns may be randomly generated unique patterns. In another example, the patterns may be based on permutations of various vectors. In one case, the LED patterns may be based on permutations of Hadamard code.

Once the sequence of LED patterns and exposure time are determined at 920, the method illuminates the sample of interest by the sequence of LED patterns at 930. The processor sends control signals to both the light detector and the LED array to synchronize the image acquisition with illumination by the LED patterns. During this image acquisition process, a first set of $N$ lower resolution intensity measurements $I = [I_1, I_2, .., I_N]$ is acquired at the light detector (940). Any of the image collection assemblies described with respect to FIGS. 1-3 can be used to sample the first set of low-resolution images.

At 950, the method generates a second set of lower resolution intensity measurements. The second set of images is analogous to what is captured when a single LED is on at each acquisition time. To generate the second set, a weighted sum operation is performed on the first set. In one example, the system performs the weighted sum operation by first defining a vector, $R_i$, associated with the LED array dimensions. Next, the multiplexed Fourier Ptychographic imaging system determines the matrix product $L_i = IR_i$. $L_1$ is our desired image formed from the first LED in the LED array. $L_j$, the image formed as if just the $j$th LED were turned on, is given as a matrix between the image matrix $I$, containing each detected image in its columns, and the $i$th cyclic permutation of R, which we label as the combination vector $R_i$. For a 2D LED array that displays a 2D pattern to form an image on a 2D detector, the weighted sum works in a similar manner, but first requires the 2D combination pattern and 2D image to be turned into vectors, by reshaping each $nxn$ combination matrix (connected to each 2D LED pattern, just like the 1D combination vectors $R_i$ are connected to their associated 1D LED patterns $s_i$) into a $1xn^2$ vector, and reshaping each $mxm$ matrix (representative of the 2D image) into a $1xm^2$ vector $I_i$. This expresses each 2D combination pattern as a 1D vector, $R_i$, just like above, and allows forming an image data matrix $I$, which contains each reshaped image $I_i$ in each of its columns, just like in the 1D pattern and image case.

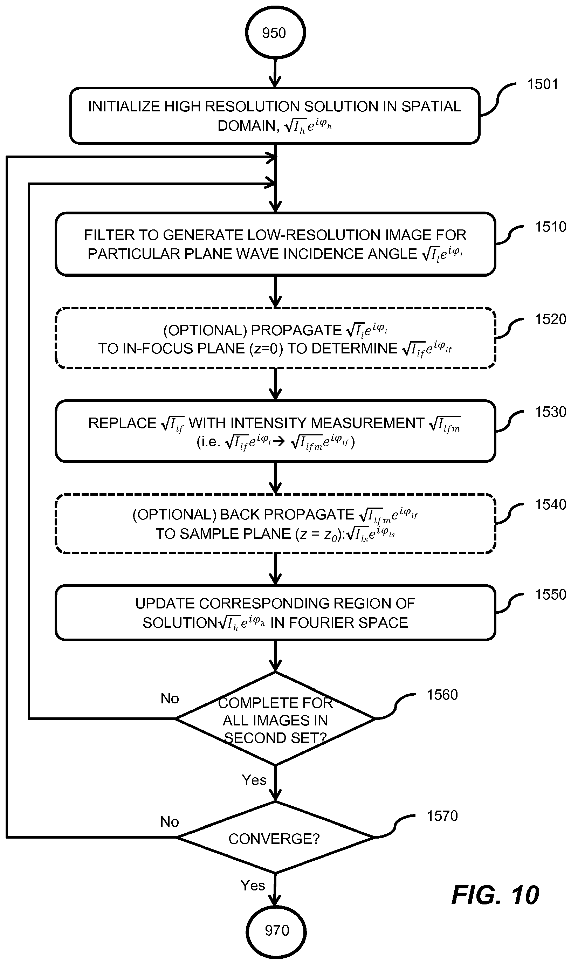

At 960, the method reconstructs a high resolution image by iteratively combining the second set of lower resolution intensity measurements in Fourier space. Two examples of operations in the reconstruction process are discussed in detail with respect to FIG. 9 and FIG. 10 in the next Section. Although not shown, after 960, the method may have an optional display operation that provides output such as, for example, the high-resolution image to a display.

At 970, the method determines whether there is another cycle. If there is another cycle (YES), the method returns to 920. If there is not another cycle (NO), the method ends (980).

### III. Reconstruction Process

Certain details of the reconstruction process can be found in Zheng, Guoan, Horstmeyer, Roarke, and Yang, Changhuei, "Wide-field, high-resolution Fourier ptychographic microscopy," Nature Photonics vol. 7, pp. 739-745 (2013) and in U.S. Patent Application 14/065,280, titled "Fourier Ptychographic Imaging Systems, Devices, and Methods" and filed on October 28, 2013. During the reconstruction operation, overlapping regions in the Fourier domain are iteratively updated with lower the lower resolution intensity image data to generate a higher resolution image.

**FIG. 10** is a flowchart of a reconstruction process, according to an embodiment. In this process, a high-resolution image of the sample may be computationally reconstructed from the second set of $N$ low-resolution intensity distribution measurements, $I_{lm}(k_x^i, k_y^i)$ (indexed by their illumination wavevector, $k_x^i, k_y^i$, with i =1, 2, ....N) generated at operation **950** in **FIG. 9**.

At **1501**, a high-resolution image: $\sqrt{I_h}\,e^{i\varphi_h}$ is initialized in the spatial domain, and a Fourier transform is applied to the initial value to obtain an initialized Fourier transformed image $\tilde{I}_h$. The initialized high-resolution solution may be an initial guess. This initial guess may be determined based on the assumption that the sample is located at the out-of-focus plane $z = z_0$. In some cases, the initial guess may be determined as a random complex matrix (for both intensity and phase). In other cases, the initial guess may be determined as an interpolation of the low-resolution intensity measurement with a random phase. An example of an initial guess is $\varphi = 0$ and $I_h$ interpolated from any low-resolution image of the sample area. Another example of an initial guess is a constant value. The Fourier transform of the initial guess can be a broad spectrum in the Fourier domain.

In the iterative operations of **1510**, **1520**, **1530**, **1540**, **1550**, **1560**, and **1570**, the high-resolution image of the sample is computationally reconstructed by iteratively combining low-resolution intensity measurements in Fourier space using a processor of the Multiplexed Fourier ptychographic imaging system. Optional operations **1520** and **1540** may be performed if the sample is out-of-focus by the amount of $z_0$.

At **1510**, the processor performs low-pass filtering of the high-resolution image $\sqrt{I_h}\,e^{i\varphi_h}$ in the Fourier domain to generate a low-resolution image $\sqrt{I_l}\,e^{i\varphi_l}$ for a particular plane wave incidence angle $(\theta_x^i, \theta_y^i)$ with a wave vector $(k_x^i, k_y^i)$. The Fourier transform of the high-resolution image is $\tilde{I}_h$ and the Fourier transform of the low-resolution image for a particular plane wave incidence angle is $\tilde{I}_l$. In the Fourier domain, the reconstruction process filters a low-pass region from the spectrum $\tilde{I}_h$ of the high-resolution image $\sqrt{I_h}\,e^{i\varphi_h}$. In cases with an optical element in the form of an objective lens, this region is a circular aperture with a radius of $NA^*k_0$, where $k_0$ equals $2\pi/\lambda$ (the wave number in vacuum), given by the coherent transfer function of an objective lens. In Fourier space, the location of the region corresponds to the incidence angle. For an oblique plane wave incidence with a wave vector $(k_x^i, k_y^i)$, the region is centered about a position $(-k_x^i, -k_y^i)$ in the Fourier domain of $\sqrt{I_h}\,e^{i\varphi_h}$.

At optional operation **1520,** using the processor, the low-resolution image, $\sqrt{I_l}\,e^{i\varphi_l}$ is propagated in the Fourier domain to the in-focus plane at $z = 0$ of the optical element to determine the low-resolution image at the focused position: $\sqrt{I_{lf}}\,e^{i\varphi_{lf}}$. In one embodiment, operation **1520** can be performed by Fourier transforming the low-resolution image $\sqrt{I_l}\,e^{i\varphi_l}$, multiplying by a phase factor in the Fourier domain, and inverse Fourier transforming to obtain $\sqrt{I_{lf}}\,e^{i\varphi_{lf}}$. In another embodiment, operation **1520** can be performed by the mathematically equivalent operation of convolving the low-resolution image $\sqrt{I_l}\,e^{i\varphi_l}$ with the point-spread-function for the defocus. In another embodiment, operation **1520** can be performed as an optional sub-operation of operation **1510** by multiplying by multiplying $\tilde{I}_l$ by a phase factor in the Fourier domain before performing the inverse Fourier transform to produce $\sqrt{I_{lf}}\,e^{i\varphi_{lf}}$. Optional operation **1520** need not be included if the sample is located at the in-focus plane ($z = 0$) of the optical element.

At operation **1530,** using the processor, the computed amplitude component $\sqrt{I_{lf}}$ of the low-resolution image at the in-focus plane, $\sqrt{I_{lf}}\,e^{i\varphi_{lf}}$, is replaced with the square root of the low-resolution intensity measurement $\sqrt{I_{lfm}}$ measured by the light detector of the Multiplexed Fourier ptychographic imaging system. This forms an updated low resolution target: $\sqrt{I_{lfm}}\,e^{i\varphi_{lf}}$.

At optional operation **1540**, using the processor, the updated low-resolution image $\sqrt{I_{lfm}}\,e^{i\varphi_{lf}}$ may be back-propagated to the sample plane ($z = z_0$) to determine $\sqrt{I_{ls}}\,e^{i\varphi_{ls}}$. Optional operation **1540** need not be included if the sample is located at the in-focus plane of the optical element, that is, where $z_0 = 0$. In one embodiment, operation 1540 can be performed by taking the Fourier transform of the updated low-resolution image $\sqrt{I_{lfm}}\,e^{i\varphi_{lf}}$ and multiplying in the Fourier space by a phase factor, and then inverse Fourier transforming it. In another embodiment, operation **1540** can be performed by convolving the updated low-resolution image $\sqrt{I_{lfm}}\,e^{i\varphi_{lf}}$ with the point-spread-function of the defocus. In another embodiment, operation **1540** can be performed as a sub-operation of operation **1550** by multiplying by a phase factor after performing the Fourier transform onto the updated target image.

At operation **1550**, using the processor, a Fourier transform is applied to the updated target image propagated to the sample plane: $\sqrt{I_{ls}}\,e^{i\varphi_{ls}}$, and this data is updated in the corresponding region of high-resolution solution $\sqrt{I_h}\,e^{i\varphi_h}$ in the Fourier space corresponding to the corresponding to the incidence wave vector $(k_x{}^i,\ k_y{}^i)$.

At operation **1560**, the processor determines whether operations **1510** through **1560** have been completed for all the images in the second set of images. If operations **1510** through 1560 have not been completed for all the images, operations **1510** through **1560** are repeated for the next image.

At operation **1570**, the processor determines whether the high-resolution solution has converged (operation **1570**). For example, the processor may determine whether the high-resolution solution may have converged to a self-consistent solution. In one case, the processor compares the previous high-resolution solution of the previous iteration or initial guess to the present high-resolution solution, and if the difference is less than a certain value, the solution may have converged to a self-consistent solution. If the processor determines that the solution has not converged, then operations **1510** through **1570** are repeated. In one embodiment, operations **1510** through **1560** are repeated once. In other embodiments, operations **1510** through **1560** are repeated twice or more. If the solution has converged, the processor transforms the converged solution in Fourier space to the spatial domain to recover a high-resolution image $\sqrt{I_h}\,e^{i\varphi_h}$. If the processor determines that the solution has converged at operation **1570**, then the process returns to operation **970** in **FIG. 9**.

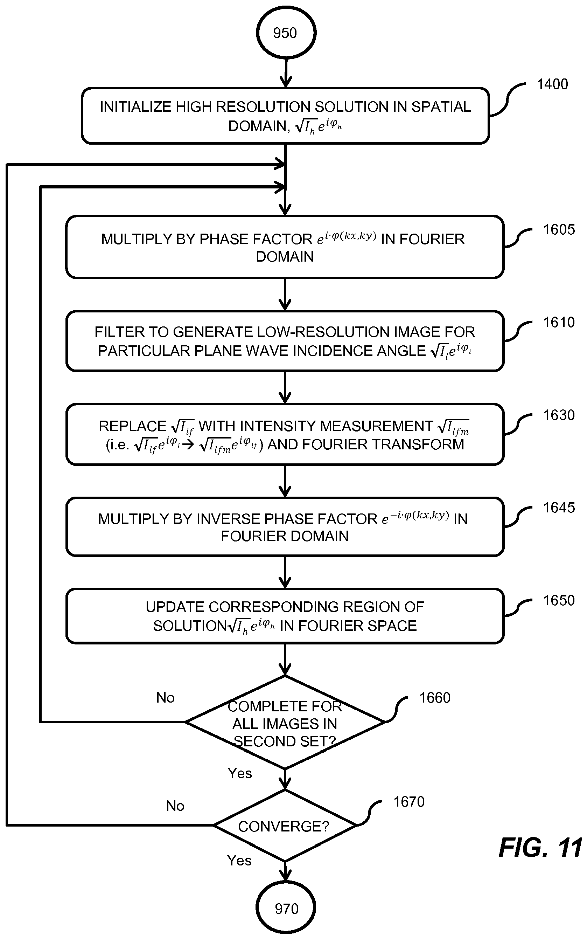

**FIG. 11** is a flowchart of a reconstruction process, according to an embodiment. In this process, a high-resolution image of the sample may be computationally reconstructed from the second set of *N* low-resolution intensity distribution measurements, $I_{lm}\left(k^i{}_x,\ k_y{}^i\right)$ (indexed by their illumination wavevector, $k_x{}^i,\ k_y{}^i$, with i = 1, 2,...,N) generated at operation **950** in **FIG. 9**.

In this example, the process includes digital wavefront correction. The process incorporates digital wavefront compensation in the two multiplication operations **1605** and **1645**. Specifically, operation **1605** models the connection between the actual sample profile and the captured intensity data (with includes aberrations) through multiplication with a pupil function: $e^{i\cdot\varphi(k_x,k_y)}$ by the processor. Operation **1645** inverts such a connection to achieve an aberration-free reconstructed image. Sample defocus is essentially equivalent to introducing a defocus phase factor to the pupil plane (i.e., a defocus aberration):

$$e^{i\cdot\varphi(k_x,k_y)} = e^{i\sqrt{(2\pi/\lambda)^2 - k_x^2 - k_y^2}\cdot z_0}, k_x^2 + k_y^2 < (NA \cdot 2\pi/\lambda)^2 \qquad \text{(Eqn. 1)}$$

where $k_x$ and $k_y$ are the wavenumbers at the pupil plane, $z_0$ is the defocus distance, and NA is the numerical aperture of the optical element.

At **1601**, a high-resolution image: $\sqrt{I_h}\,e^{i\varphi_h}$ is initialized in the spatial domain, and a Fourier transform is applied to the initial value to obtain an initialized Fourier transformed image $\tilde{I}_h$. The initialized high-resolution solution may be an initial guess. This initial guess may be determined based on the assumption that the sample is located at the out-of-focus plane $z = z_0$. In some cases, the initial guess may be determined as a random complex matrix (for both intensity and phase). In other cases, the initial guess may be determined as an interpolation of the low-resolution intensity measurement with a random phase. An example of an initial guess is $\varphi = 0$ and $I_h$ interpolated from any low-resolution image of the sample area. Another example of an initial guess is a constant value. The Fourier transform of the initial guess can be a broad spectrum in the Fourier domain.

In the iterative operations of **1605**, **1610**, **1630**, **1645**, **1650**, **1660**, and **1670**, the high-resolution image of the sample is computationally reconstructed by iteratively combining low-resolution intensity measurements in Fourier space using a processor of the Multiplexed Fourier ptychographic imaging system.

At operation **1605**, the processor multiplies by a phase factor $e^{i \cdot \varphi(k_x, k_y)}$ in Fourier domain.

At operation **1610**, the processor performs low-pass filtering of the high-resolution image $\sqrt{I_h}\, e^{i\varphi_h}$ in the Fourier domain to generate a low-resolution image $\sqrt{I_l}\, e^{i\varphi_l}$ for a particular plane wave incidence angle $(\theta_x^i, \theta_y^i)$ with a wave vector $(k_x^i, k_y^i)$. The Fourier transform of the high-resolution image is $\tilde{I}_h$ and the Fourier transform of the low-resolution image for a particular plane wave incidence angle is $\tilde{I}_l$. In the Fourier domain, the process filters a low-pass region from the spectrum $\tilde{I}_h$ of the high-resolution image $\sqrt{I_h}\, e^{i\varphi_h}$. In cases with an optical element in the form of an objective lens, this region is a circular aperture with a radius of $NA^*k_0$, where $k_0$ equals $2\pi/\lambda$ (the wave number in vacuum), given by the coherent transfer function of an objective lens. In Fourier space, the location of the region corresponds to the incidence angle. For an oblique plane wave incidence with a wave vector $(k_x^i, k_y^i)$, the region is centered about a position $(-k_x^i, -k_y^i)$ in the Fourier domain of $\sqrt{I_h}\, e^{i\varphi_h}$.

At operation **1630**, using the processor, the computed amplitude component $\sqrt{I_{lf}}$ of the low-resolution image at the in-focus plane, $\sqrt{I_{lf}}\, e^{i\varphi_{lf}}$, is replaced with the square root of the low-resolution intensity measurement $\sqrt{I_{lfm}}$ measured by the light detector of the Multiplexed Fourier ptychographic imaging system. This forms an updated low resolution target: $\sqrt{I_{lfm}}\, e^{i\varphi_{lf}}$.

At operation **1645**, the processor multiplies by an inverse phase factor $e^{-i \cdot \varphi(k_x, k_y)}$ in Fourier domain.

At operation **1650**, using the processor, a Fourier transform is applied to the updated target image propagated to the sample plane: $\sqrt{I_{ls}}\, e^{i\varphi_{ls}}$, and this data is updated in the corresponding region of high-resolution solution $\sqrt{I_h}\, e^{i\varphi_h}$ in the Fourier space corresponding to the corresponding to the incidence wave vector $(k_x^i, k_y^i)$.

At operation **1660,** the processor determines whether operations **1605** through **1650** have been completed for all images in the second set. If operations **1605** through **1650** have not been completed for all images, operations **1605** through **1650** are repeated for the next image in the second set of images.

At operation **1670**, the processor determines whether the high-resolution solution has converged. For example, the processor may determine whether the high-resolution solution may have converged to a self-consistent solution. In one case, the processor compares the previous high-resolution solution of the previous iteration or initial guess to the present high-resolution solution, and if the difference is less than a certain value, the solution may have converged to a self-consistent solution. If processor determines that the solution has not converged, then operations **1605** through **1670** are repeated. In one embodiment, operations **1605** through **1670** are repeated once. In other embodiments, operations **1605** through **1670** are repeated twice or more. If the solution has converged, the processor transforms the converged solution in Fourier space to the spatial domain to recover a high-resolution image $\sqrt{I_h}\, e^{i\varphi_h}$. If the processor determines that the solution has converged at operation **1670**, then the process returns to operation **970** in **FIG. 9**.

In certain aspects, the neighboring regions in Fourier space, which are iteratively updated for each image in the second set, overlap each other. In the overlapping area between updated overlapping regions, the Multiplexed Fourier ptychographic imaging system has multiple samplings over the same Fourier space. In one embodiment, the overlapping area between neighboring regions may have an area that is between 2% to 99.5% of the area of one of the neighboring regions. In another embodiment, the overlapping area between neighboring regions may have an area that is between 65% to 75% of the area of one of the neighboring regions. In another embodiment, the overlapping area between neighboring regions may have an area that is about 65% of the area of one of the neighboring regions.

*IV. Subsystems*

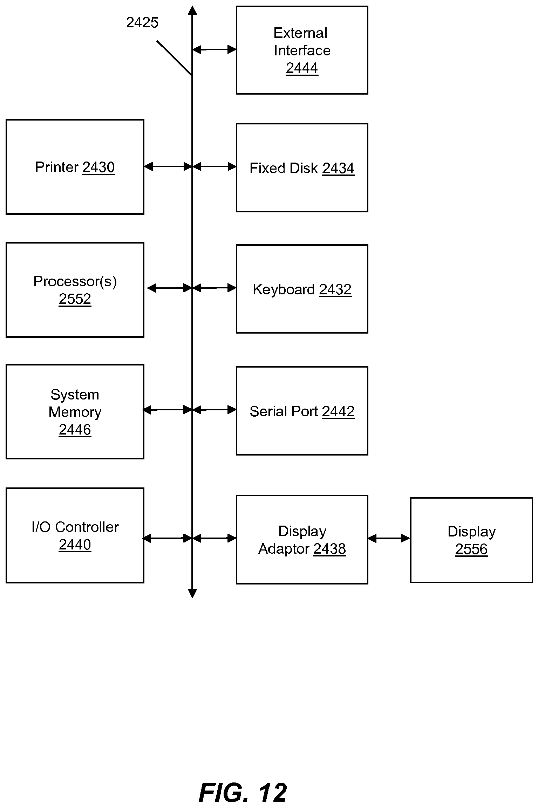

**FIG. 12** is a block diagram of one or more subsystems that may be present in certain Multiplexed Fourier ptychographic imaging systems, according to embodiments.

The various components previously described in the Figures may operate using one or more of the subsystems in **FIG. 12** to facilitate the functions described herein. Any of the components in the Figures may use any suitable number of subsystems to facilitate the functions described herein. Examples of such subsystems and/or components are shown in a **FIG. 12**. The subsystems shown in **FIG. 12** are interconnected via a system bus **2425**. Additional subsystems such as a printer **2430**, keyboard **2432**, fixed disk **2434** (or other memory comprising computer readable media), display **2556,** which is coupled to display adapter **2438,** and others are shown. Peripherals and input/output (I/O) devices, which couple to I/O controller **2440,** can be connected by any number of means known in the art, such as serial port **2442.** For example, serial port **2442** or external interface **2444** can be used to connect components of a computing device to a wide area network such as the Internet, a mouse input device, or a scanner. The interconnection via system bus **2425** allows the processor **2552** to communicate with each subsystem and to control the execution of instructions from system memory **2446** or the fixed disk **2434,** as well as the exchange of information between subsystems. The system memory **2446** and/or the fixed disk **2434** may embody the CRM **146** in some cases. Any of these elements may be present in the previously described features.

In some embodiments, an output device such as the printer **2430** or display **2556** of the Multiplexed Fourier ptychographic imaging system can output various forms of data. For example, the Multiplexed Fourier ptychographic imaging system can output 2D color/monochromatic images (intensity and/or phase), data associated with these images, or other data associated with analyses performed by the Multiplexed Fourier ptychographic imaging system.

Modifications, additions, or omissions may be made to any of the above-described embodiments without departing from the scope of the disclosure. Any of the embodiments described above may include more, fewer, or other features without departing from the scope of the disclosure. Additionally, the operations of the described features may be performed in any suitable order without departing from the scope of the disclosure.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application, may be implemented as software code to be executed by a processor using any suitable computer language such as, for example, Java, C++ or Perl using, for example, conventional or object-oriented techniques. The software code may be stored as a series of instructions, or commands on a CRM, such as a random access memory (RAM), a read only memory (ROM), a magnetic medium such as a hard-drive or a floppy disk, or an optical medium such as a CD-ROM. Any such CRM may reside on or within a single computational apparatus, and may be present on or within different computational apparatuses within a system or network.

Although the foregoing disclosed embodiments have been described in some detail to facilitate understanding, the described embodiments are to be considered illustrative and not limiting. It will be apparent to one of ordinary skill in the art that certain changes and modifications can be practiced within the scope of the appended claims.

One or more features from any embodiment may be combined with one or more features of any other embodiment without departing from the scope of the disclosure. Further, modifications, additions, or omissions may be made to any embodiment without departing from the scope of the disclosure. The components of any embodiment may be integrated or separated according to particular needs without departing from the scope of the disclosure.

**Claims**

**1.** A multiplexed Fourier Ptychographic imaging system comprising:

an LED array (112, 212, 312, 412, 714, 814) configured to illuminate a sequence of differing LED patterns, each LED pattern comprising a different plurality of illuminated LEDs (214), the LED array (112, 212, 312, 412, 714, 814) located to illuminate a sample (20, 21) being imaged;
LED circuitry (114, 414) in electrical communication with the LED array (112, 212, 312, 412, 714, 814), wherein the LED circuitry (114, 414) is configured to independently control power to turn on multiple LEDs simultaneously in each LED pattern;
a lens (120, 220, 320) configured to collect light issuing from the illuminated sample (20, 21);

15

a light detector (130, 230, 330) configured to receive light from the lens (120, 220, 320) to acquire a first set of lower resolution images associated with the sequence of LED patterns, wherein each lower resolution image of the first set is based on light issued from the sample (20, 21) and received during an exposure time; a processor (144) configured to:

perform a weighted sum operation on the first set of lower resolution images to generate a second set of lower resolution images, each image of the second set associated with one LED in the LED array (112, 212, 312, 412, 714, 814); and

iteratively update overlapping regions in the Fourier domain with the second set of lower resolution images to generate a higher resolution complex image of the sample (20, 21) using a phase-retrieval operation to recover phase data from the second set of lower resolution images.

2. The multiplexed Fourier Ptychographic imaging system of Claim 1, wherein the processor (144) is further configured to send control signals through the LED circuitry (114, 414) to the LED array (112, 212, 312, 412, 714, 814) to turn on multiple LEDs simultaneously in each LED pattern.

3. The multiplexed Fourier Ptychographic imaging system of Claim 1, wherein the LED circuitry (114, 414) comprises a wire from each LED in the LED array (112, 212, 312, 412, 714, 814) to control logic of the processor (144).

4. The multiplexed Fourier Ptychographic imaging system of Claim 1, wherein the processor (144) is further configured to determine the sequence of LED patterns and the exposure time and, optionally, wherein the LED patterns and the exposure time are determined based on tuning input.

5. The multiplexed Fourier Ptychographic imaging system of Claim 4, wherein the processor (144) is configured to determine the LED patterns and the exposure time based on one or both of the processing time of the Fourier Ptychographic imaging system and a signal-to-noise ratio (SNR), of images acquired during operation.

6. The multiplexed Fourier Ptychographic imaging system of Claim 5, wherein the processor (144) is configured to determine the sequence of LED patterns and the exposure time based on one or both of a maximum processing time and a minimum signal-to-noise ratio (SNR).

7. The multiplexed Fourier Ptychographic imaging system of Claim 1, wherein each LED pattern in the sequence is a Hayamard pattern and, optionally, wherein each LED pattern has a number of LEDs equal to more than half the total number of LEDs in the LED array (112, 212, 312, 412, 714, 814).

8. An LED array assembly (110, 210, 310, 410, 501) for use in a multiplexed Fourier Ptychographic imaging system, the LED array assembly comprising:

an LED array (112, 212, 312, 412, 714, 814) configured to sequentially illuminate a sequence of differing LED patterns, the LED array (112, 212, 312, 412, 714, 814) located to illuminate a sample (20, 21) being imaged; LED circuitry (114, 414) in electrical communication with the LED array (112, 212, 312, 412, 714, 814), wherein the LED circuitry (114, 414) is configured to independently control power to turn on multiple LEDs simultaneously in each LED pattern; and a processor (144) in communication with the LED circuitry (114, 414) and adapted to:

receive tuning input comprising a maximum processing time and a predetermined signal-to-noise ratio (SNR);
calculate a number of LEDs in each LED pattern based on the predetermined signal-to-noise-ratio (SNR);
calculate an exposure time of each LED pattern based on the maximum processing time; and

send control signals to the LED array 112 through the LED circuitry 114 with instructions to illuminate the sequence of LED patterns responsive to the calculated numbers of LEDs in each pattern and the calculated exposure times.

9. The LED array assembly of Claim 8, wherein the LED array (112, 212, 312, 412, 714, 814) receives control signals to illuminate the sequence of LED patterns from a controller through the LED circuity.

10. The LED array assembly of Claim 9, wherein the LED circuitry (114, 414) comprises a wire from each LED in the LED array (112, 212, 312, 412, 714, 814) to control logic of a processor (144).

11. A multiplexing Fourier Ptychographic imaging method comprising:

multiplexed illuminating of a sample (20, 21) by a sequence of different LED patterns using an LED array (112, 212, 312, 412, 714, 814) each LED pattern comprising a different plurality of illuminated LEDS;

collecting light issuing from the sample (20, 21) using a lens (120, 220, 320);

acquiring (940) a first set of low resolution images of the sample (20, 21) using a light detector (130, 230, 330) receiving light from the lens (120, 220, 320), each low resolution image of the first set captured during an exposure time while one of the LED patterns is illuminated, wherein each low resolution image of the first set is based on light issuing from the sample (20, 21);

perform a weighted sum operation on the first set of low resolution images to generate (950) a second set of low resolution images of the sample (20, 21), wherein each low resolution image of the second set is associated with a single LED in the LED array patterns; and

reconstructing (960) a higher resolution complex image of the sample (20, 21) by iteratively updating overlapping regions in Fourier space with the second set of low resolution images using a phase-retrieval operation to recover phase data from the second set of low resolution images.

12. The multiplexing Fourier Ptychographic imaging method of Claim 11, further comprising selecting the LED patterns and the exposure time based on one or both of a processing time and a signal-to-noise ratio (SNR).

13. The multiplexing Fourier Ptychographic imaging method of Claim 12, further comprising receiving tuning input that includes the processing time or is related to the processing time.

14. The multiplexing Fourier Ptychographic imaging method of Claim 11, wherein multiplexed illuminating of the sample (20, 21) with LED patterns comprises receiving control signals at the LED array (112, 212, 312, 412, 714, 814) to independently turn on each LED of each of the sequence of LED patterns.

15. The multiplexing Fourier Ptychographic imaging method of Claim 11, wherein selecting the LED patterns and the exposure time comprises selecting instructions for sending control signals to the LED array (112, 212, 312, 412, 714, 814) for illuminating the sequence of LED patterns.

**Patentansprüche**

1. Ein gemultiplextes Fourier-Ptychographie-Abbildungssystem, das Folgendes beinhaltet:

ein LED-Array (112, 212, 312, 412, 714, 814), das konfiguriert ist, um eine Folge von unterschiedlichen LED-Mustern zu beleuchten, wobei jedes LED-Muster eine unterschiedliche Vielzahl von beleuchteten LEDs (214) beinhaltet, wobei das LED-Array (112, 212, 312, 412, 714, 814) angeordnet ist, um eine abzubildende Probe (20, 21) zu beleuchten;

einen LED-Schaltkreis (114, 414) in elektrischer Kommunikation mit dem LED-Array (112, 212, 312, 412, 714, 814), wobei der LED-Schaltkreis (114, 414) konfiguriert ist, um Leistung unabhängig zu steuern, um mehrere LEDs gleichzeitig in jedem LED-Muster einzuschalten;

eine Linse (120, 220, 320), die konfiguriert ist, um Licht zu sammeln, das von der beleuchteten Probe (20, 21) ausgeht;

einen Lichtdetektor (130, 230, 330), der konfiguriert ist, um Licht von der Linse (120, 220, 320) zu empfangen, um einen ersten Satz von Bildern mit niedrigerer Auflösung, die mit der Folge von LED-Mustern assoziiert sind, zu erfassen, wobei jedes Bild mit niedrigerer Auflösung des ersten Satzes auf Licht basiert, das von der Probe (20, 21) ausgeht und während einer Belichtungszeit empfangen wurde;

einen Prozessor (144), der für Folgendes konfiguriert ist:

Durchführen einer gewichteten Summenoperation für den ersten Satz von Bildern mit niedrigerer Auflösung, um einen zweiten Satz von Bildern mit niedrigerer Auflösung zu erzeugen, wobei jedes Bild des zweiten Satzes mit einer LED in dem LED-Array (112, 212, 312, 412, 714, 814) assoziiert ist; und

iteratives Aktualisieren überlappender Bereiche in der Fourier-Domäne mit dem zweiten Satz von Bildern mit niedrigerer Auflösung, um ein komplexes Bild mit höherer Auflösung der Probe (20, 21) unter Verwendung einer Phasenabrufoperation zu erzeugen, um Phasendaten aus dem zweiten Satz von Bildern mit niedrigerer Auflösung wiederherzustellen.

2. Gemultiplextes Fourier-Ptychographie-Abbildungssystem gemäß Anspruch 1, wobei der Prozessor (144) ferner konfiguriert ist, um Steuersignale über den LED-Schaltkreis (114, 414) an das LED-Array (112, 212, 312, 412, 714, 814) zu senden, um mehrere LEDs gleichzeitig in jedem LED-Muster einzuschalten.

3. Gemultiplextes Fourier-Ptychographie-Abbildungssystem gemäß Anspruch 1, wobei der LED-Schaltkreis (114, 414) einen Draht von jeder LED in dem LED-Array (112, 212, 312, 412, 714, 814) beinhaltet, um die Logik des Prozessors (144) zu steuern.

4. Gemultiplextes Fourier-Ptychographie-Abbildungssystem gemäß Anspruch 1, wobei der Prozessor (144) ferner konfiguriert ist, um die Folge von LED-Mustern und die Belichtungszeit zu bestimmen, und, optional, wobei die LED-Muster und die Belichtungszeit basierend auf einer Abstimmungseingabe bestimmt werden.

5. Gemultiplextes Fourier-Ptychographie-Abbildungssystem gemäß Anspruch 4, wobei der Prozessor (144) konfiguriert ist, um die LED-Muster und die Belichtungszeit basierend auf einem oder beiden von der Verarbeitungszeit des Fourier-Ptychographie-Abbildungssystems und einem Signal-Rausch-Verhältnis (SRV) von Bildern, die während des Betriebs erfasst wurden, zu bestimmen.

6. Gemultiplextes Fourier-Ptychographie-Abbildungssystem gemäß Anspruch 5, wobei der Prozessor (144) konfiguriert ist, um die Folge von LED-Mustern und die Belichtungszeit basierend auf einem oder beiden von einer maximalen Verarbeitungszeit und einem minimalen Signal-Rausch-Verhältnis (SRV) zu bestimmen.

7. Gemultiplextes Fourier-Ptychographie-Abbildungssystem gemäß Anspruch 1, wobei jedes LED-Muster in der Folge ein Hadamard-Muster ist und, optional, wobei jedes LED-Muster eine Anzahl von LEDs aufweist, die mehr als der Hälfte der Gesamtanzahl von LEDs in dem LED-Array (112, 212, 312, 412, 714, 814) entspricht.

8. Eine LED-Array-Anordnung (110, 210, 310, 410, 501) zur Verwendung in einem gemultiplexten Fourier-Ptychographie-Abbildungssystem, wobei die LED-Array-Anordnung Folgendes beinhaltet:

   ein LED-Array (112, 212, 312, 412, 714, 814), das konfiguriert ist, um eine Folge von unterschiedlichen LED-Mustern sequenziell zu beleuchten, wobei das LED-Array (112, 212, 312, 412, 714, 814) angeordnet ist, um eine abzubildende Probe (20, 21) zu beleuchten;
   einen LED-Schaltkreis (114, 414) in elektrischer Kommunikation mit dem LED-Array (112, 212, 312, 412, 714, 814), wobei der LED-Schaltkreis (114, 414) konfiguriert ist, um Leistung unabhängig zu steuern, um mehrere LEDs gleichzeitig in jedem LED-Muster einzuschalten; und
   einen Prozessor (144), der mit dem LED-Schaltkreis (114, 414) in Kommunikation ist und für Folgendes angepasst ist:

      Empfangen einer Abstimmungseingabe, die eine maximale Verarbeitungszeit und ein vorbestimmtes Signal-Rausch-Verhältnis (SRV) beinhaltet;
      Berechnen einer Anzahl von LEDs in jedem LED-Muster basierend auf dem vorbestimmten Signal-Rausch-Verhältnis (SRV);
      Berechnen einer Belichtungszeit jedes LED-Musters basierend auf der maximalen Verarbeitungszeit; und
      Senden von Steuersignalen an das LED-Array 112 über den LED-Schaltkreis 114 mit Anweisungen zum Beleuchten der Folge von LED-Mustern als Reaktion auf die berechnete Anzahl von LEDs in jedem Muster und die berechneten Belichtungszeiten.

9. LED-Array-Anordnung gemäß Anspruch 8, wobei das LED-Array (112, 212, 312, 412, 714, 814) über den LED-Schaltkreis von einer Steuerung Steuersignale empfängt, um die Folge von LED-Mustern zu beleuchten.

10. LED-Array-Anordnung gemäß Anspruch 9, wobei der LED-Schaltkreis (114, 414) einen Draht von jeder LED in dem LED-Array (112, 212, 312, 412, 714, 814) beinhaltet, um die Logik eines Prozessors (144) zu steuern.

11. Ein Multiplexing-Fourier-Ptychographie-Abbildungsverfahren, das Folgendes beinhaltet:

   gemultiplextes Beleuchten einer Probe (20, 21) durch eine Folge unterschiedlicher LED-Muster unter Verwendung eines LED-Arrays (112, 212, 312, 412, 714, 814), wobei jedes LED-Muster eine unterschiedliche Vielzahl von beleuchteten LEDs beinhaltet;

Sammeln von Licht, das von der Probe (20, 21) ausgeht, unter Verwendung einer Linse (120, 220, 320);

Erfassen (940) eines ersten Satzes von Bildern mit niedriger Auflösung der Probe (20, 21) unter Verwendung eines Lichtdetektors (130, 230, 330), der Licht von der Linse (120, 220, 320) empfängt, wobei jedes Bild mit niedriger Auflösung des ersten Satzes während einer Belichtungszeit aufgenommen wird, während eines der LED-Muster beleuchtet wird, wobei jedes Bild mit niedriger Auflösung des ersten Satzes auf Licht basiert, das von der Probe (20, 21) ausgeht;

Durchführen einer gewichteten Summenoperation an dem ersten Satz von Bildern mit niedriger Auflösung, um einen zweiten Satz von Bildern mit niedriger Auflösung der Probe (20, 21) zu erzeugen (950), wobei jedes Bild mit niedriger Auflösung des zweiten Satzes mit einer einzelnen LED in den LED-Array-Mustern assoziiert ist; und

Rekonstruieren (960) eines komplexen Bildes mit höherer Auflösung der Probe (20, 21) durch iteratives Aktualisieren überlappender Bereiche im Fourier-Raum mit dem zweiten Satz von Bildern mit niedriger Auflösung unter Verwendung einer Phasenabrufoperation, um Phasendaten aus dem zweiten Satz von Bildern mit niedriger Auflösung wiederherzustellen.

12. Multiplexing-Fourier-Ptychographie-Abbildungsverfahren gemäß Anspruch 11, das ferner das Auswählen der LED-Muster und der Belichtungszeit basierend auf einem oder beiden von einer Verarbeitungszeit und einem Signal-Rausch-Verhältnis (SRV) beinhaltet.

13. Multiplexing-Fourier-Ptychographie-Abbildungsverfahren gemäß Anspruch 12, das ferner das Empfangen einer Abstimmungseingabe, die die Verarbeitungszeit umfasst oder mit der Verarbeitungszeit zusammenhängt, beinhaltet.

14. Multiplexing-Ptychographie-Abbildungssystem gemäß Anspruch 11, wobei das gemultiplexte Beleuchten der Probe (20, 21) mit LED-Mustern das Empfangen von Steuersignalen an dem LED-Array (112, 212, 312, 412, 714, 814) beinhaltet, um jede LED jedes der Folge von LED-Mustern unabhängig einzuschalten.

15. Multiplexing-Ptychographie-Abbildungsverfahren gemäß Anspruch 11, wobei das Auswählen der LED-Muster und der Belichtungszeit das Auswählen von Anweisungen zum Senden von Steuersignalen an das LED-Array (112, 212, 312, 412, 714, 814) zum Beleuchten der Folge von LED-Mustern beinhaltet.

## Revendications

1. Un système d'imagerie ptychographique de Fourier multiplexée comprenant :

un réseau de DEL (112, 212, 312, 412, 714, 814) configuré pour éclairer une séquence de motifs de DEL qui diffèrent, chaque motif de DEL comprenant une pluralité différente de DEL éclairées (214), le réseau de DEL (112, 212, 312, 412, 714, 814) étant situé de façon à éclairer un échantillon (20, 21) soumis à imagerie ;

une circuiterie de DEL (114, 414) en communication électrique avec le réseau de DEL (112, 212, 312, 412, 714, 814), la circuiterie de DEL (114, 414) étant configurée pour commander indépendamment l'alimentation afin d'allumer de multiples DEL simultanément dans chaque motif de DEL ;

une lentille (120, 220, 320) configurée pour collecter de la lumière émanant de l'échantillon éclairé (20, 21) ;

un détecteur de lumière (130, 230, 330) configuré pour recevoir de la lumière en provenance de la lentille (120, 220, 320) afin d'acquérir un premier jeu d'images à plus basse résolution associées à la séquence de motifs de DEL, chaque image à plus basse résolution du premier jeu étant basée sur de la lumière ayant émané de l'échantillon (20, 21) et étant reçue durant un temps d'exposition ;

un processeur (144) configuré pour :

réaliser une opération de somme pondérée sur le premier jeu d'images à plus basse résolution afin de générer un deuxième jeu d'images à plus basse résolution, chaque image du deuxième jeu étant associée à une DEL dans le réseau de DEL (112, 212, 312, 412, 714, 814) ; et

mettre à jour de manière itérative des régions se chevauchant dans le domaine de Fourier avec le deuxième jeu d'images à plus basse résolution afin de générer une image complexe à plus haute résolution de l'échantillon (20, 21) en utilisant une opération de récupération de phase afin de recouvrer des données de phase à partir du deuxième jeu d'images à plus basse résolution.

2. Le système d'imagerie ptychographique de Fourier multiplexée de la revendication 1, dans lequel le processeur (144) est en sus configuré pour envoyer des signaux de commande par l'intermédiaire de la circuiterie de DEL (114, 414) au réseau de DEL (112, 212, 312, 412, 714, 814) afin d'allumer de multiples DEL simultanément dans chaque motif de DEL.

3. Le système d'imagerie ptychographique de Fourier multiplexée de la revendication 1, dans lequel la circuiterie de DEL (114, 414) comprend un fil conducteur allant de chaque DEL dans le réseau de DEL (112, 212, 312, 412, 714, 814) à une logique de commande du processeur (144).

4. Le système d'imagerie ptychographique de Fourier multiplexée de la revendication 1, dans lequel le processeur (144) est en sus configuré pour déterminer la séquence de motifs de DEL et le temps d'exposition et, facultativement, dans lequel les motifs de DEL et le temps d'exposition sont déterminés sur la base d'une entrée de réglage.

5. Le système d'imagerie ptychographique de Fourier multiplexée de la revendication 4, dans lequel le processeur (144) est configuré pour déterminer les motifs de DEL et le temps d'exposition sur la base d'un élément ou des deux éléments parmi le temps de traitement du système d'imagerie ptychographique de Fourier et un rapport signal sur bruit (RSB), d'images acquises durant une opération.

6. Le système d'imagerie ptychographique de Fourier multiplexée de la revendication 5, dans lequel le processeur (144) est configuré pour déterminer la séquence de motifs de DEL et le temps d'exposition sur la base d'un élément ou des deux éléments parmi un temps de traitement maximal et un rapport signal sur bruit (RSB) minimal.

7. Le système d'imagerie ptychographique de Fourier multiplexée de la revendication 1, dans lequel chaque motif de DEL dans la séquence est un motif de Hadamard et, facultativement, dans lequel chaque motif de DEL a un nombre de DEL égal à plus de la moitié du nombre total de DEL dans le réseau de DEL (112, 212, 312, 412, 714, 814).

8. Un ensemble à réseau de DEL (110, 210, 310, 410, 501) pour une utilisation dans un système d'imagerie ptychographique de Fourier multiplexée, l'ensemble à réseau de DEL comprenant :

   un réseau de DEL (112, 212, 312, 412, 714, 814) configuré pour éclairer séquentiellement une séquence de motifs de DEL qui diffèrent, le réseau de DEL (112, 212, 312, 412, 714, 814) étant situé de façon à éclairer un échantillon (20, 21) soumis à imagerie ;
   une circuiterie de DEL (114, 414) en communication électrique avec le réseau de DEL (112, 212, 312, 412, 714, 814), la circuiterie de DEL (114, 414) étant configurée pour commander indépendamment l'alimentation afin d'allumer de multiples DEL simultanément dans chaque motif de DEL ; et
   un processeur (144) en communication avec la circuiterie de DEL (114, 414) et conçu pour :

      recevoir une entrée de réglage comprenant un temps de traitement maximal et un rapport signal sur bruit (RSB) prédéterminé ;
      calculer un nombre de DEL dans chaque motif de DEL sur la base du rapport signal sur bruit (RSB) prédéterminé ;
      calculer un temps d'exposition de chaque motif de DEL sur la base du temps de traitement maximal ; et
      envoyer des signaux de commande au réseau de DEL 112 par l'intermédiaire de la circuiterie de DEL 114 avec des instructions afin d'éclairer la séquence de motifs de DEL en réponse aux nombres calculés de DEL dans chaque motif et aux temps d'exposition calculés.

9. L'ensemble à réseau de DEL de la revendication 8, dans lequel le réseau de DEL (112, 212, 312, 412, 714, 814) reçoit des signaux de commande afin d'éclairer la séquence de motifs de DEL en provenance d'un organe de commande par l'intermédiaire de la circuiterie de DEL.

10. L'ensemble à réseau de DEL de la revendication 9, dans lequel la circuiterie de DEL (114, 414) comprend un fil conducteur allant de chaque DEL dans le réseau de DEL (112, 212, 312, 412, 714, 814) à une logique de commande d'un processeur (144).

11. Un procédé d'imagerie ptychographique de Fourier à multiplexage comprenant :

   l'éclairage multiplexé d'un échantillon (20, 21) par une séquence de motifs de DEL différents en utilisant un réseau de DEL (112, 212, 312, 412, 714, 814), chaque motif de DEL comprenant une pluralité différente de DEL éclairées ;
   la collecte de lumière émanant de l'échantillon (20, 21) en utilisant une lentille (120, 220, 320) ;

l'acquisition (940) d'un premier jeu d'images à basse résolution de l'échantillon (20, 21) en utilisant un détecteur de lumière (130, 230, 330) recevant de la lumière en provenance de la lentille (120, 220, 320), chaque image à basse résolution du premier jeu étant capturée durant un temps d'exposition pendant que l'un des motifs de DEL est éclairé, chaque image à basse résolution du premier jeu étant basée sur de la lumière émanant de l'échantillon (20, 21) ;

réaliser une opération de somme pondérée sur le premier jeu d'images à basse résolution afin de générer (950) un deuxième jeu d'images à basse résolution de l'échantillon (20, 21), chaque image à basse résolution du deuxième jeu étant associée à une DEL unique dans les motifs de réseau de DEL ; et

la reconstruction (960) d'une image complexe à plus haute résolution de l'échantillon (20, 21) par mise à jour itérative de régions se chevauchant dans un espace de Fourier avec le deuxième jeu d'images à basse résolution en utilisant une opération de récupération de phase afin de recouvrer des données de phase à partir du deuxième jeu d'images à basse résolution.

12. Le procédé d'imagerie ptychographique de Fourier à multiplexage de la revendication 11, comprenant en sus la sélection des motifs de DEL et du temps d'exposition sur la base d'un élément ou des deux éléments parmi un temps de traitement et un rapport signal sur bruit (RSB).

13. Le procédé d'imagerie ptychographique de Fourier à multiplexage de la revendication 12, comprenant en sus la réception d'une entrée de réglage qui inclut le temps de traitement ou est relative au temps de traitement.

14. Le procédé d'imagerie ptychographique de Fourier à multiplexage de la revendication 11, dans lequel l'éclairage multiplexé de l'échantillon (20, 21) avec des motifs de DEL comprend la réception de signaux de commande au niveau du réseau de DEL (112, 212, 312, 412, 714, 814) afin d'allumer indépendamment chaque DEL de chaque motif parmi la séquence de motifs de DEL.

15. Le procédé d'imagerie ptychographique de Fourier à multiplexage de la revendication 11, dans lequel la sélection des motifs de DEL et du temps d'exposition comprend la sélection d'instructions pour l'envoi de signaux de commande au réseau de DEL (112, 212, 312, 412, 714, 814) pour l'éclairage de la séquence de motifs de DEL.

<u>10</u>

*FIG. 1*

**FIG. 2**

**FIG. 3**

410

Control Logic

414

412

**FIG. 4**

501

**FIG. 5**

FIG. 6

*FIG. 7*

FIG. 8

START — 910

DETERMINE SEQUENCE OF LED PATTERNS AND EXPOSURE TIME — 920

ILLUMINATE SAMPLE BY SEQUENCE OF LED PATTERNS — 930

ACQUIRE *FIRST SET* OF LOWER-RESOLUTION INTENSITY MEASUREMENTS — 940

GENERATE *SECOND SET* OF LOWER-RESOLUTION INTENSITY MEASUREMENTS — 950

RECONSTRUCT HIGHER RESOLUTION IMAGE BY ITERATIVELY COMBINING *SECOND SET* OF LOWER-RESOLUTION INTENSITY MEASUREMENTS IN FOURIER SPACE — 960

NEXT CYCLE? — 970

YES

NO

END — 980

*FIG. 9*

**950**

INITIALIZE HIGH RESOLUTION SOLUTION IN SPATIAL DOMAIN, $\sqrt{I_h}\,e^{i\varphi_h}$ — 1501

FILTER TO GENERATE LOW-RESOLUTION IMAGE FOR PARTICULAR PLANE WAVE INCIDENCE ANGLE $\sqrt{I_l}\,e^{i\varphi_l}$ — 1510

(OPTIONAL) PROPAGATE $\sqrt{I_l}\,e^{i\varphi_l}$ TO IN-FOCUS PLANE ($z=0$) TO DETERMINE $\sqrt{I_{lf}}\,e^{i\varphi_{lf}}$ — 1520

REPLACE $\sqrt{I_{lf}}$ WITH INTENSITY MEASUREMENT $\sqrt{I_{lfm}}$ (i.e. $\sqrt{I_{lf}}\,e^{i\varphi_{lf}} \rightarrow \sqrt{I_{lfm}}\,e^{i\varphi_{lf}}$) — 1530

(OPTIONAL) BACK PROPAGATE $\sqrt{I_{lfm}}\,e^{i\varphi_{lf}}$ TO SAMPLE PLANE ($z = z_0$): $\sqrt{I_{ls}}\,e^{i\varphi_{ls}}$ — 1540

UPDATE CORRESPONDING REGION OF SOLUTION $\sqrt{I_h}\,e^{i\varphi_h}$ IN FOURIER SPACE — 1550

COMPLETE FOR ALL IMAGES IN SECOND SET? — 1560

No

Yes

CONVERGE? — 1570

No

Yes

**970**

*FIG. 10*

950

INITIALIZE HIGH RESOLUTION SOLUTION IN SPATIAL DOMAIN, $\sqrt{I_h}\,e^{i\varphi_h}$ — 1400

MULTIPLY BY PHASE FACTOR $e^{i\cdot\varphi(kx,ky)}$ IN FOURIER DOMAIN — 1605

FILTER TO GENERATE LOW-RESOLUTION IMAGE FOR PARTICULAR PLANE WAVE INCIDENCE ANGLE $\sqrt{I_l}\,e^{i\varphi_l}$ — 1610

REPLACE $\sqrt{I_{lf}}$ WITH INTENSITY MEASUREMENT $\sqrt{I_{lfm}}$ (i.e. $\sqrt{I_{lf}}\,e^{i\varphi_{lf}} \rightarrow \sqrt{I_{lfm}}\,e^{i\varphi_{lf}}$) AND FOURIER TRANSFORM — 1630

MULTIPLY BY INVERSE PHASE FACTOR $e^{-i\cdot\varphi(kx,ky)}$ IN FOURIER DOMAIN — 1645

UPDATE CORRESPONDING REGION OF SOLUTION $\sqrt{I_h}\,e^{i\varphi_h}$ IN FOURIER SPACE — 1650

COMPLETE FOR ALL IMAGES IN SECOND SET? — 1660
No
Yes

CONVERGE? — 1670
No
Yes

970

*FIG. 11*

2425

External
Interface
2444

Printer 2430

Fixed Disk 2434

Processor(s)
2552

Keyboard 2432

System
Memory
2446

Serial Port 2442

I/O Controller
2440

Display
Adaptor 2438

Display
2556

*FIG. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 06528013
- US 61720258
- US 61847472
- US 62087633

### Non-patent literature cited in the description

- **ZHENG, GUOAN ; HORSTMEYER, ROARKE ; YANG, CHANGHUEI.** Wide-field, high-resolution Fourier ptychographic microscopy. *Nature Photonics,* 2013, vol. 7, 739-745
- **LEI TIAN.** Multiplexed coded illumination for Fourier Ptychography with an LED array microscope. *Biomedical Optics Express,* 2014, vol. 5 (7), 2376-2389
- **SCHECHNER, Y. Y. ; NAYAR, S. K. ; BELHUMEUR, P. N.** Multiplexing for optimal lighting. *IEEE PAMI27,* 2007, 1339-1356
- **TIAN, L. ; LI, X. ; RAMCHANDRAN, K. ; WALLER, L.** Multiplexed coded illumination for Fourier ptychography with an LED microscope. *Biomedical Optics Express,* 2014, vol. 5 (7), 2376-2389